# EUROPEAN PATENT APPLICATION

(11) **EP 4 834 593 A1**
(43) Date of publication of application: **04.11.2026**
(21) Application number: 26158938.6
(22) Date of filing: 17.02.2026
(51) Int. Cl.: B41J 2/21, C09D 11/00

(54) **PRINTING SYSTEM AND PRINTING METHOD**

(30) Priority: 19.02.2025 JP 2025024792
(71) Applicant: Seiko Epson Corporation, Tokyo 160-8801 (JP)
(72) Inventor: KONDO, Takamitsu, Suwa-shi, 392-8502 (JP)
(74) Representative: Lewis Silkin LLP

(57) **Abstract**

A print head is configured to eject, to a first surface of a medium, an ink containing a color component and a functional liquid that changes a color development state of a second surface of the medium by the ink. A control unit receives settings of a first image to be formed at the first surface and a second image to be formed at the second surface, and, in order to form the first image on the first surface and the second image on the second surface by ejecting the ink and the functional liquid onto the first surface, assigns an ink ejection amount and a functional liquid ejection amount to each part of a printing region to which the ink and the functional liquid are ejected onto the first surface according to a density of the first image and a density of the second image, and controls the print head to eject the ink and the functional liquid to the first surface according to the ink ejection amount and the functional liquid ejection amount assigned to each part of the printing region.

## Description

The present application is based on, and claims priority from JP Application Serial Number 2025-024792, filed February 19, 2025, the disclosure of which is hereby incorporated by reference herein in its entirety.

### BACKGROUND

### 1. Technical Field

The present disclosure relates to a printing system and a printing method.

### 2. Related Art

JP-A-2016-40425 discloses a printing method for a hand towel on both front and back surfaces using an inkjet printer. The printing method includes a pretreatment step of applying a paste-like pretreatment agent to the entire front surface of a hand towel, a back surface printing step of printing a pattern on a back surface with a color lighter than that of the front surface after the pretreatment step, and a front surface printing step of printing with a color darker than that of the back surface while leaving a blank part on a front surface after the back surface printing step.

JP-A-2016-40425 is an example of the related art.

However, in order to form images on both surfaces of a medium such as the hand towel, it is necessary to eject an ink from a print head to a back surface of the medium, then turn over the medium, and eject the ink from the print head to a front surface of the medium.

### SUMMARY

According to an aspect of the present disclosure, there is provided a printing system configured to perform printing on a medium having a first surface and a second surface on an opposite side from the first surface, including:
a print head including a first nozzle configured to eject an ink containing a color component onto the first surface and a second nozzle configured to eject a functional liquid for changing a color development state of the second surface by the ink onto the first surface; and
a control unit configured to control ejection of the ink and the functional liquid from the print head, in which
an amount of the ink ejected from the first nozzle per unit area of the first surface is an ink ejection amount, and an amount of the functional liquid ejected from the second nozzle per unit area of the first surface is a functional liquid ejection amount, and
the control unit performs
   first processing of receiving settings of a first image to be formed at the first surface and a second image to be formed at the second surface,
   second processing of, in order to form the first image on the first surface and the second image on the second surface by ejecting the ink and the functional liquid onto the first surface, assigning the ink ejection amount and the functional liquid ejection amount to each part of a printing region to which the ink and the functional liquid are ejected onto the first surface according to a density of the first image and a density of the second image, and
   third processing of controlling the print head so that the ink and the functional liquid are ejected onto the first surface according to the ink ejection amount and the functional liquid ejection amount assigned to each part of the printing region.

In addition, a printing method according to the present disclosure is a printing method of ejecting an ink containing a color component from a first nozzle of a print head onto a first surface of a medium, and ejecting a functional liquid that changes a color development state of the second surface by the ink from a second nozzle of the print head onto the first surface,
the medium having a second surface on an opposite side from the first surface,
the functional liquid changing a color development state of the second surface by the ink, and
an amount of the ink ejected from the first nozzle per unit area of the first surface being an ink ejection amount, and an amount of the functional liquid ejected from the second nozzle per unit area of the first surface being a functional liquid ejection amount,
the printing method includes:
   a first step of receiving settings of a first image to be formed at the first surface and a second image to be formed at the second surface;
   a second step of, in order to form the first image on the first surface and the second image on the second surface by ejecting the ink and the functional liquid onto the first surface, assigning the ink ejection amount and the functional liquid ejection amount to each part of a printing region to which the ink and the functional liquid are ejected onto the first surface according to a density of the first image and a density of the second image; and
   a third step of ejecting the ink and the functional liquid from the print head onto the first surface according to the ink ejection amount and the functional liquid ejection amount assigned to each part of the printing region.

### BRIEF DESCRIPTION OF THE DRAWINGS

FIG. 1 is a diagram schematically showing an example of a configuration of a printing system.
FIG. 2 is a block diagram schematically showing an example of the configuration of the printing system.
FIG. 3 is a bottom view schematically showing an example of a nozzle surface of a print head.
FIG. 4 is a diagram schematically showing an example in which a first image is formed at a first surface of a medium and a second image is formed at a second surface thereof by ejecting an ink and a functional liquid onto the first surface of the medium.
FIG. 5 is a diagram schematically showing an example in which printing is performed by generating print data in which the first image on the first surface and the second image on the second surface are combined.
FIGS. 6A and 6B are diagrams schematically showing examples of an ink ejection amount and a functional liquid ejection amount of each partial region, and examples of a functional liquid amount region and an ink amount region of a printing region.
FIG. 7 is a diagram schematically showing an example of a first surface side of a test pattern including a plurality of patches having different combinations of an ink ejection amount IK and a functional liquid ejection amount FL.
FIG. 8 is a diagram schematically showing an example of a second surface side of a test pattern including a plurality of patches having different combinations of the ink ejection amount IK and the functional liquid ejection amount FL.
FIG. 9 is a diagram schematically showing an example in which the ink ejection amount and the functional liquid ejection amount of each partial region are assigned from a reading result read by a reading unit.
FIG. 10 is a flowchart schematically showing an example of ejection amount setting processing when the reading unit is not used.
FIG. 11 is a diagram schematically showing a display example of a patch selection result input screen.
FIG. 12 is a flowchart schematically showing an example of the ejection amount setting processing when the reading unit is used.
FIG. 13 is a flowchart schematically showing an example of print control processing.
FIG. 14 is a diagram schematically showing an example of printing by generating print data by inverting the second image.
FIG. 15 is a diagram schematically showing an example in which printing is performed by generating the print data in which the first image on the first surface and a solid second image on the second surface are combined.
FIG. 16 is a diagram schematically showing an example in which printing is performed by generating the print data in which a solid first image on the first surface and the second image on the second surface are combined.

### DESCRIPTION OF EMBODIMENTS

An embodiment of the present disclosure will be described below. Obviously, the following embodiment is nothing more than exemplifying the present disclosure, and all the features shown in the embodiment are not necessarily essential to the solution disclosed herein.

### 1. Overview of Aspects Included in Present Disclosure:

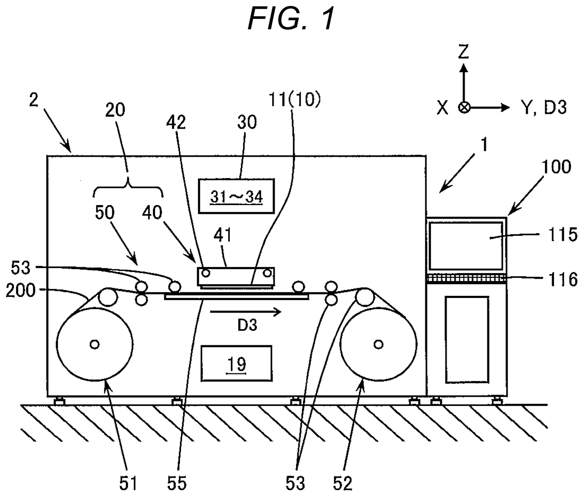

An overview of aspects included in the present disclosure will first be described with reference to examples shown in FIGS. 1 to 16. The drawings in the present application schematically show examples, and the magnification in each direction shown in the drawings may vary and the drawings may not be consistent with each other. Obviously, each element in the present aspects is not limited to a specific example denoted by the reference symbol. In "Overview of aspects included in present disclosure", a term in parentheses means a supplementary description of the term immediately before the parentheses.

In the present application, a numerical range "Min to Max" means numerals equal to or greater than a minimum value Min but equal to or smaller than a maximum value Max.

### Aspect 1

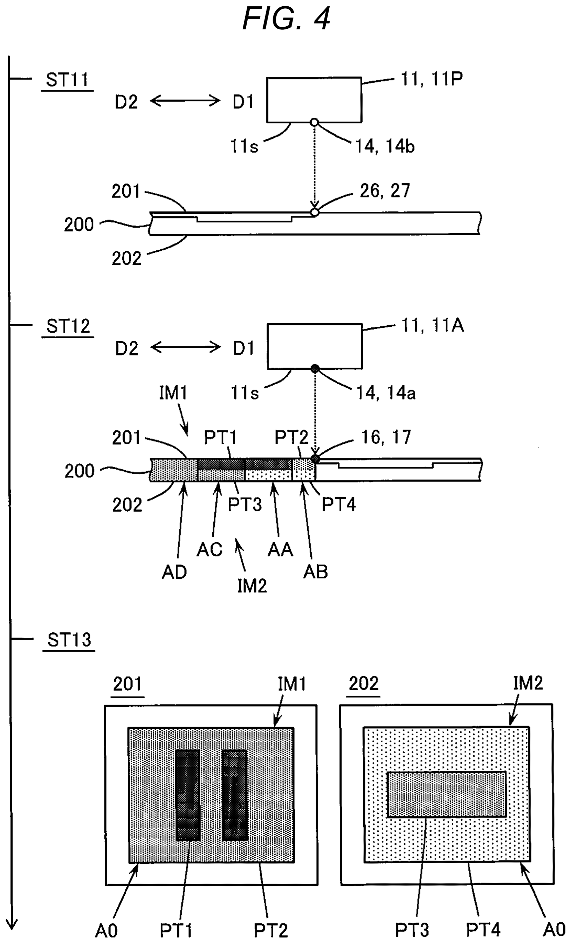

As shown in FIGS. 1 to 4 and the like, a printing system 1 according to an aspect is a printing system 1 that performs printing on a medium 200 having a first surface 201 and a second surface 202 opposite to the first surface 201, and includes a print head 11 and a control unit 3. The print head 11 has first nozzles 14a capable of ejecting an ink 16 containing a color component onto the first surface 201, and second nozzles 14b capable of ejecting a functional liquid 26, which changes a color development state of the second surface 202 by the ink 16, onto the first surface 201. The control unit 3 controls ejection of the ink 16 and the functional liquid 26 from the print head 11. Here, an amount of the ink 16 ejected from the first nozzle 14a per unit area of the first surface 201 is defined as an ink ejection amount IK, and an amount of the functional liquid 26 ejected from the second nozzle 14b per unit area of the first surface 201 is defined as a functional liquid ejection amount FL. As shown in FIGS. 4, 5, and 13 and the like, the control unit 3 performs the following control.

(a1) First processing of receiving settings of a first image IM1 to be formed at the first surface 201 and a second image IM2 to be formed at the second surface 202.

(a2) In order to form the first image IM1 on the first surface 201 and form the second image IM2 on the second surface 202 by ejecting the ink 16 and the functional liquid 26 onto the first surface 201, second processing of assigning the ink ejection amount IK and the functional liquid ejection amount FL according to a density of the first image IM1 and a density of the second image IM2 to each part of a printing region A0 to which the ink 16 and the functional liquid 26 are ejected onto the first surface 201 is performed.

(a3) Third processing of controlling the print head 11 so that the ink 16 and the functional liquid 26 are ejected onto the first surface 201 according to the ink ejection amount IK and the functional liquid ejection amount FL assigned to each part of the printing region A0.

When the ink 16 is ejected onto the first surface 201 of the medium 200, not only is an image formed at the first surface 201, but also an image is formed at the second surface 202 opposite to the first surface 201 by the ink 16 permeating into the medium 200. Here, the print head 11 has the second nozzles 14b capable of ejecting the functional liquid 26, which changes the color development state of the second surface 202 by the ink 16, onto the first surface 201. Then, in order to form the first image IM1 on the first surface 201 and form the second image IM2 on the second surface 202 by ejecting the ink 16 and the functional liquid 26 onto the first surface 201, the ink ejection amount IK and the functional liquid ejection amount FL are assigned to each part of the printing region A0 of the first surface 201 according to the density of the first image IM1 and the density of the second image IM2. The set first image IM1 is formed at the first surface 201 and the set second image IM2 is formed at the second surface 202 by ejecting the ink 16 and the functional liquid 26 onto the first surface 201 according to the ink ejection amount IK and the functional liquid ejection amount FL assigned to each part of the printing region A0. In other words, the second image IM2 formed at the second surface 202 is not formed by ejecting the ink 16 onto the second surface 202, but is formed by the ink 16 ejected onto the first surface 201. Therefore, the image is printed simultaneously on both surfaces of the medium 200 by ejecting the ink 16 onto one surface of the medium 200. Therefore, according to the aspect, it is possible to provide a printing system capable of forming desired print images on both surfaces of a medium by ejecting an ink only onto one surface of the medium. As a result, an operation of turning over the medium and a conveyance path for turning over the medium are not necessary, the time and cost required for printing can be reduced, and a printed product close to double-sided printing can be easily obtained.

Various examples are listed in the aspect described above.

The ink may be a pigment ink or a dye ink.

The color component may be a chromatic color component such as cyan, magenta, or yellow, or may be an achromatic color component such as black or white.

The functional liquid may be a treatment liquid for aggregating a pigment, a clear ink having no color component, a penetrant liquid for dye ink, or the like.

Changing the color development state of the second surface means changing a surface state or a degree of permeation of the ink to change the tint visually recognized when the second surface is viewed.

The amount of ink ejected per unit area may be the number of ink droplets ejected per unit area, or may be the number of ink droplets converted to the largest ink droplet when ink droplets having different sizes are ejected. The amount of ink ejected per unit area may be the size of an ink droplet. The amount of functional liquid ejected per unit area may be the number of functional liquid droplets ejected per unit area, or may be the number of functional liquid droplets converted to the largest functional liquid droplet when functional liquid droplets having different sizes are ejected. The amount of functional liquid ejected per unit area may be the size of the functional liquid droplet.

The first image means an image visually recognized when the first surface is viewed. The second image means an image visually recognized when the second surface is viewed. Forming the second image on the second surface means forming the second image on the second surface by permeation or the like of the ink ejected onto the first surface, and does not mean ejecting the ink onto the second surface.

In the present application, "first", "second", and so on are terms used to identify each component element contained in the plurality of component elements similar to one another, and do not necessarily indicate the order.

Obviously, the additional remarks described above also apply to the following aspects.

### Aspect 2

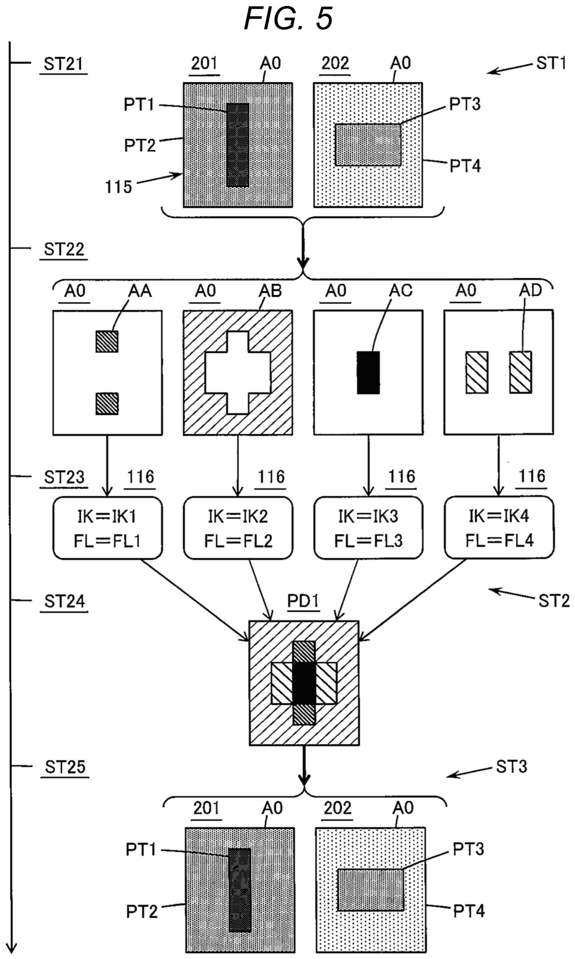

As shown in FIGS. 4, 5 and the like, the first image IM1 may include a first portion PT1 having a predetermined density and a second portion PT2 that is lighter than the first portion PT1. The second image IM2 may include a third portion PT3 having a predetermined density and a fourth portion PT4 that is lighter than the third portion PT3. The printing region A0 may include a first partial region AA where the first portion PT1 and the fourth portion PT4 overlap each other, a second partial region AB where the second portion PT2 and the fourth portion PT4 overlap each other, a third partial region AC where the first portion PT1 and the third portion PT3 overlap each other, and a fourth partial region AD where the second portion PT2 and the third portion PT3 overlap each other. In the second processing, the control unit 3 may assign a first ink ejection amount IK1 as the ink ejection amount IK and a first functional liquid ejection amount FL1 as the functional liquid ejection amount FL to the first partial region AA. In the second processing, the control unit 3 may assign a second ink ejection amount IK2 as the ink ejection amount IK and a second functional liquid ejection amount FL2 as the functional liquid ejection amount FL to the second partial region AB. In the second processing, the control unit 3 may assign a third ink ejection amount IK3 as the ink ejection amount IK and a third functional liquid ejection amount FL3 as the functional liquid ejection amount FL to the third partial region AC. In the second processing, the control unit 3 may assign a fourth ink ejection amount IK4 as the ink ejection amount IK and a fourth functional liquid ejection amount FL4 as the functional liquid ejection amount FL to the fourth partial region AD.

In this case, it is possible to provide a preferable example in which a desired print image is formed on both surfaces of the medium by ejecting the ink only onto one surface of the medium. Any of the ink ejection amounts IK may be 0, and any of the functional liquid ejection amounts FL may be 0.

Here, the second image IM2 may not include the fourth portion PT4 and may have a predetermined density. In this case, in the second processing, the control unit 3 may assign the third ink ejection amount IK3 and the third functional liquid ejection amount FL3 to the third partial region AC and assign the fourth ink ejection amount IK4 and the fourth functional liquid ejection amount FL4 to the fourth partial region AD with the second image IM2 as the third portion PT3.

The first image IM1 may not include the second portion PT2 and may have a predetermined density. In this case, in the second processing, the control unit 3 may assign the first ink ejection amount IK1 and the first functional liquid ejection amount FL1 to the first partial region AA and assign the third ink ejection amount IK3 and the third functional liquid ejection amount FL3 to the third partial region AC with the first image IM1 as the first portion PT1.

The additional remark described above also applies to the following aspects.

### Aspect 3

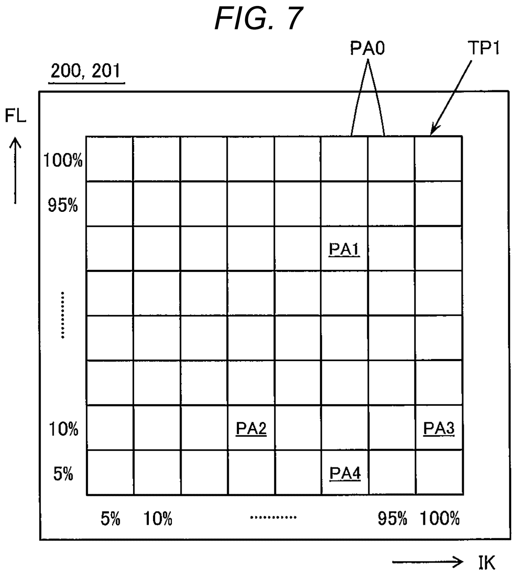

As shown in FIGS. 7, 8, 10, and 11, the control unit 3 may further perform the following control.

(a4) Fourth processing of controlling the print head 11 so that a test pattern TP1 including a plurality of patches PA0 having different combinations of the ink ejection amount IK and the functional liquid ejection amount FL is formed on the medium 200.

(a5) Fifth processing of receiving, among the plurality of patches PA0, an input of a selection result of the patch PA0 corresponding to a partial region selected from the first partial region AA, the second partial region AB, the third partial region AC, and the fourth partial region AD, and assigning the ink ejection amount IK and the functional liquid ejection amount FL corresponding to the selection result to the partial region.

In this case, the density of the first image IM1 and the density of the second image IM2 are represented based on the selection result of the patch PA0 from the test pattern TP1. Therefore, the above aspect can improve image quality of the first image and the second image.

Here, in the fifth processing, the control unit 3 may receive an input of the selection result of the patch PA0 to be associated with the first partial region AA from among the plurality of patches PA0, and set the ink ejection amount IK corresponding to the selection result to the first ink ejection amount IK1. The control unit 3 may receive an input of the selection result of the patch PA0 to be associated with the second partial region AB from among the plurality of patches PA0, and set the ink ejection amount IK corresponding to the selection result to the second ink ejection amount IK2. The control unit 3 may receive an input of the selection result of the patch PA0 to be associated with the third partial region AC from among the plurality of patches PA0, and set the ink ejection amount IK corresponding to the selection result to the third ink ejection amount IK3. The control unit 3 may receive an input of the selection result of the patch PA0 to be associated with the fourth partial region AD from among the plurality of patches PA0, and set the ink ejection amount IK corresponding to the selection result to the fourth ink ejection amount IK4.

### Aspect 4

As shown in FIGS. 7, 8, 11, and 12, the control unit 3 may further perform the following control.

(a6) Sixth processing of determining at least a part of the first ink ejection amount IK1, the first functional liquid ejection amount FL1, the second ink ejection amount IK2, the second functional liquid ejection amount FL2, the third ink ejection amount IK3, the third functional liquid ejection amount FL3, the fourth ink ejection amount IK4, and the fourth functional liquid ejection amount FL4 based on a first reading result obtained by reading the density of each patch PA0 formed at the first surface 201 by the reading unit 180 and a second reading result obtained by reading the density of each patch PA0 formed at the second surface 202 by the reading unit 180.

In this case, the density of the first image IM1 and the density of the second image IM2 are represented based on the reading result of the test pattern TP1 by the reading unit 180. Therefore, the above aspect can improve the image quality of the first image and the second image.

### Aspect 5

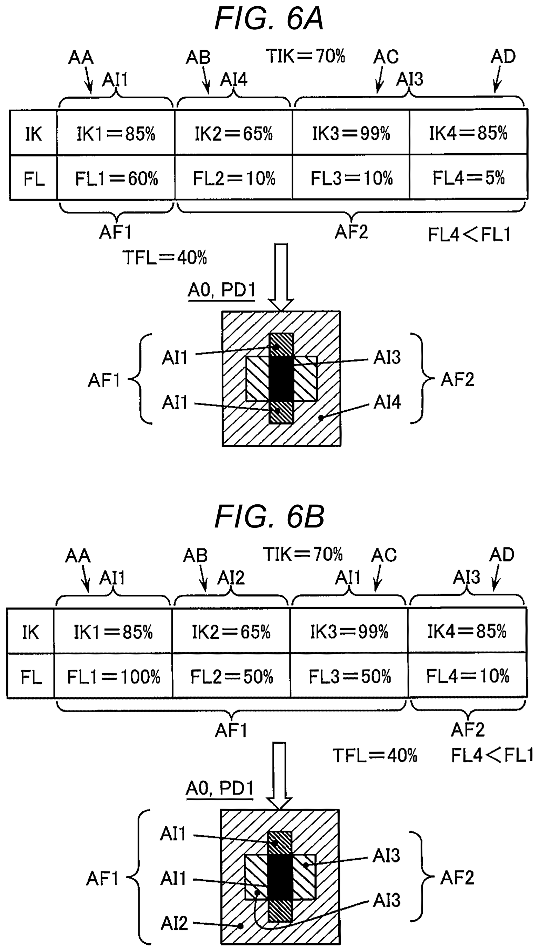

The ink 16 may be a pigment ink containing a dispersed pigment as the color component. The functional liquid 26 may be a treatment liquid containing an aggregating agent that aggregates the pigment. As shown in FIGS. 6A and 6B, the fourth functional liquid ejection amount FL4 in the fourth partial region AD may be lower than the first functional liquid ejection amount FL1 in the first partial region AA.

Since the pigment in the pigment ink is likely to be fixed to the first surface 201 of the medium 200 by a relatively large amount of the aggregating agent in the treatment liquid in a portion where the ejection amount of the treatment liquid is high in the printing region A0, the portion is a relatively dark portion in the first image IM1, and the portion is a relatively light portion in the second image IM2. The portion corresponds to the first partial region AA. Since the pigment ink is likely to permeate the medium 200 in a portion where the ejection amount of the treatment liquid is low in the printing region A0, the portion is a relatively light portion in the first image IM1, and the portion is a relatively dark portion in the second image IM2. The portion corresponds to the fourth partial region AD.

As described above, it is possible to control the density of each part of the image on both surfaces by a level of the ejection amount of the treatment liquid. Therefore, the above aspect can provide a preferable example in which a desired print image is formed on both surfaces of the medium by ejecting the pigment ink only onto one surface of the medium.

### Aspect 6

The functional liquid 26 may be a clear ink not having the color component. The fourth functional liquid ejection amount FL4 in the fourth partial region AD may be higher than the first functional liquid ejection amount FL1 in the first partial region AA.

In a portion where the ejection amount of the clear ink is high in the printing region A0, since the ink 16 including the color component is likely to permeate the medium 200 by a large amount of the clear ink, the portion is a relatively light portion in the first image IM1, and the portion is a relatively dark portion in the second image IM2. The portion corresponds to the fourth partial region AD. In a portion where the ejection amount of the clear ink is low in the printing region A0, since the ink 16 including the color component is likely to stay on the first surface 201 of the medium 200, the portion is a relatively dark portion in the first image IM1, and the portion is a relatively light portion in the second image IM2. The portion corresponds to the first partial region AA.

As described above, it is possible to control the density of each part of the image on both surfaces by a level of the ejection amount of the clear ink. Therefore, the above aspect can also provide a preferable example in which a desired print image is formed on both surfaces of the medium by ejecting the ink only onto one surface of the medium.

### Aspect 7

The ink 16 may be a dye ink containing a dye as the color component. The functional liquid 26 may be a penetrant liquid that assists the dye ink in permeating the medium 200. The fourth functional liquid ejection amount FL4 in the fourth partial region AD may be higher than the first functional liquid ejection amount FL1 in the first partial region AA.

In a portion of the printing region A0 where the ejection amount of the penetrant liquid is high, since the dye ink is likely to permeate the medium 200 by a large amount of the penetrant liquid, the portion is a relatively light portion in the first image IM1, and the portion is a relatively dark portion in the second image IM2. The portion corresponds to the fourth partial region AD. In a portion where the ejection amount of the penetrant liquid is low in the printing region A0, since the dye ink is likely to stay on the first surface 201 of the medium 200, the portion is a relatively dark portion in the first image IM1, and the portion is a relatively light portion in the second image IM2. The portion corresponds to the first partial region AA.

As described above, it is possible to control the density of each part of the image on both surfaces by a level of the ejection amount of the penetrant liquid. Therefore, the above aspect can also provide a preferable example in which a desired print image is formed on both surfaces of the medium by ejecting the ink only onto one surface of the medium.

### Aspect 8

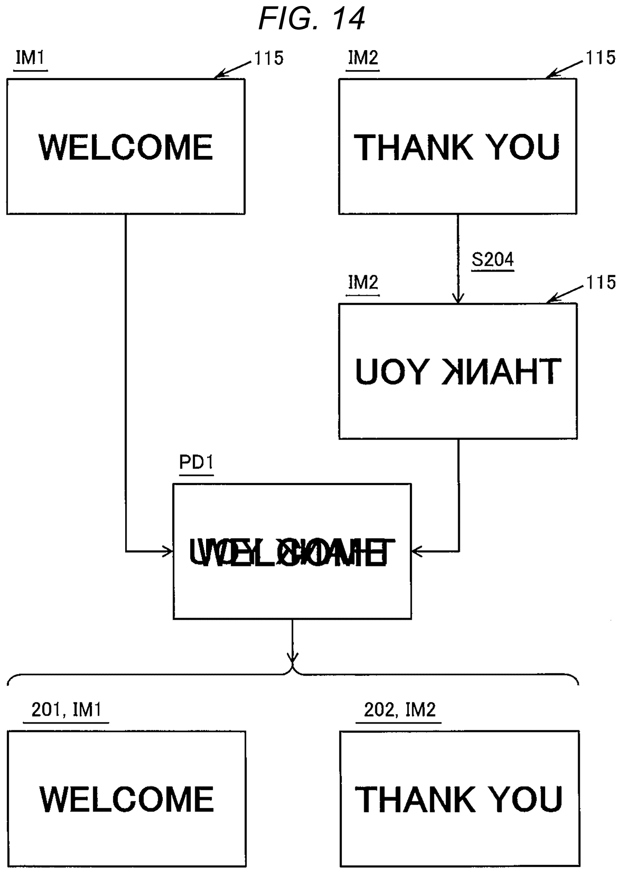

As shown in FIG. 14 and the like, in the first processing, the control unit 3 may be capable of displaying the first image IM1 and the second image IM2 on a display unit (for example, a display device 115), and may receive settings of the first image IM1 and the second image IM2 that can be displayed on the display unit (115). In the second processing, the control unit 3 may invert the second image IM2, and assign the ink ejection amount IK and the functional liquid ejection amount FL to each part of the printing region A0 based on the first image IM1 and the inverted second image IM2.

In this case, since it is not necessary to invert the second image IM2 formed at the second surface 202 of the medium 200 in advance, usability is improved.

### Aspect 9

As shown in FIGS. 6A and 6B, the printing region A0 may include a first functional liquid amount region AF1 in which the functional liquid ejection amount FL is a first ejection amount, and a second functional liquid amount region AF2 in which the functional liquid ejection amount FL is a second ejection amount lower than the first ejection amount. In the second processing, the control unit 3 may assign the first ejection amount to the first functional liquid amount region AF1, and may assign the second ejection amount to the second functional liquid amount region AF2.

In the first functional liquid amount region AF1 and the second functional liquid amount region AF2, even when the ink ejection amount IK is the same, the color development state of the second surface 202 by the ink 16 is different because the functional liquid ejection amount FL is different. Accordingly, it is possible to control the density of each part of the second image IM2 on the second surface 202. Therefore, the above aspect can provide a preferable example in which a desired print image is formed on both surfaces of the medium by ejecting the ink only onto one surface of the medium.

Here, the functional liquid ejection amounts of the first functional liquid amount region and the second functional liquid amount region are not limited to being constant, and may differ depending on the portion. The additional remark described above also applies to the following aspects.

### Aspect 10

As shown in FIG. 6B, the first functional liquid amount region AF1 may include a first ink amount region AI1 in which the ink ejection amount IK is a third ejection amount, and a second ink amount region AI2 in which the ink ejection amount IK is a fourth ejection amount lower than the third ejection amount. In the second processing, the control unit 3 may assign the third ejection amount to the first ink amount region AI1, and may assign the fourth ejection amount to the second ink amount region AI2.

In the first ink amount region AI1 and the second ink amount region AI2, even when the functional liquid ejection amount FL is the same, the color development state of the first surface 201 by the ink 16 is different due to the ink ejection amount IK being different. Accordingly, it is possible to control the density of each part of the first image IM1 on the first surface 201. Therefore, the above aspect can provide a preferable example in which a desired print image is formed on both surfaces of the medium by ejecting the ink only onto one surface of the medium.

Here, the ink ejection amounts of the first ink amount region and the second ink amount region are not limited to being constant, and may differ depending on the portion. The additional remark described above also applies to the following aspects.

### Aspect 11

As shown in FIG. 6A, the second functional liquid amount region AF2 may include a third ink amount region AI3 in which the ink ejection amount IK is a fifth ejection amount, and a fourth ink amount region AI4 in which the ink ejection amount IK is a sixth ejection amount lower than the fifth ejection amount. In the second processing, the control unit 3 may assign the fifth ejection amount to the third ink amount region AI3, and may assign the sixth ejection amount to the fourth ink amount region AI4.

In the third ink amount region AI3 and the fourth ink amount region AI4, even when the functional liquid ejection amount FL is the same, the color development state of the first surface 201 by the ink 16 is different due to the ink ejection amount IK being different. Accordingly, it is possible to control the density of each part of the first image IM1 on the first surface 201. Therefore, the above aspect can provide a preferable example in which a desired print image is formed on both surfaces of the medium by ejecting the ink only onto one surface of the medium.

Here, the ink ejection amounts of the third ink amount region and the fourth ink amount region are not limited to being constant, and may differ depending on the portion. The additional remark described above also applies to the following aspects.

### Aspect 12

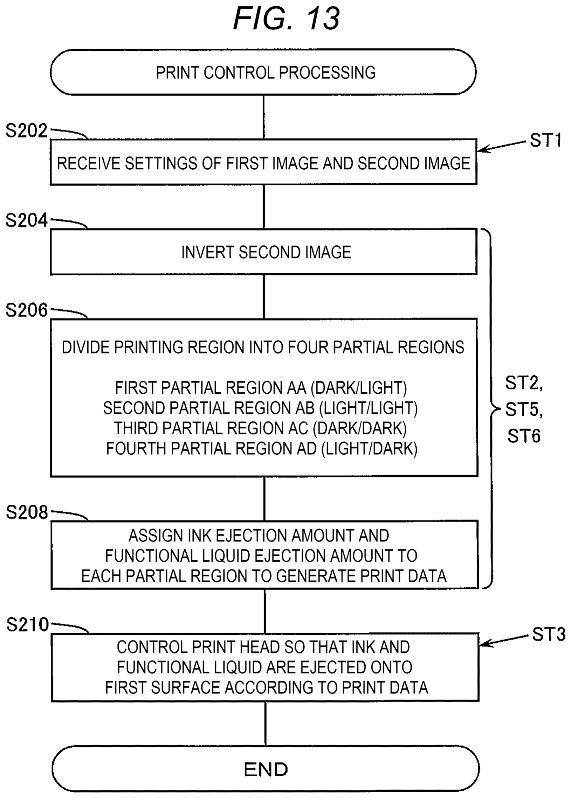

Incidentally, the printing method according to an aspect is a printing method in which the ink 16 containing the color component is ejected from the first nozzle 14a of the print head 11 to the first surface 201 of the medium 200, and the functional liquid 26 is ejected from the second nozzle 14b of the print head 11 to the first surface 201. The medium 200 has the second surface 202 opposite to the first surface 201. The functional liquid 26 changes the color development state of the second surface 202 by the ink 16. The printing method includes the following steps as shown in FIGS. 5 and 13 and the like.

(b1) A first step ST1 of receiving settings of the first image IM1 to be formed at the first surface 201 and the second image IM2 to be formed at the second surface 202.

(b2) In order to form the first image IM1 on the first surface 201 and form the second image IM2 on the second surface 202 by ejecting the ink 16 and the functional liquid 26 onto the first surface 201, a second step ST2 of assigning the ink ejection amount IK and the functional liquid ejection amount FL according to a density of the first image IM1 and a density of the second image IM2 to each part of a printing region A0 to which the ink 16 and the functional liquid 26 are ejected onto the first surface 201 is performed.

(b3) A third step ST3 of ejecting the ink 16 and the functional liquid 26 from the print head 11 onto the first surface 201 according to the ink ejection amount IK and the functional liquid ejection amount FL assigned to each part of the printing region A0.

According to the above aspect, it is possible to provide a printing method capable of forming desired print images on both surfaces of a medium by ejecting an ink only onto one surface of the medium.

Further, the above-described aspects can be applied to a printing device included in the above-described printing system, a control method for the printing device, a control program of the above-described printing device, a computer-readable non-transitory medium in which a control program is recorded, and the like. In addition, the printing device described above may include a plurality of distributed portions.

### 2. Specific Example of Configuration of Printing System:

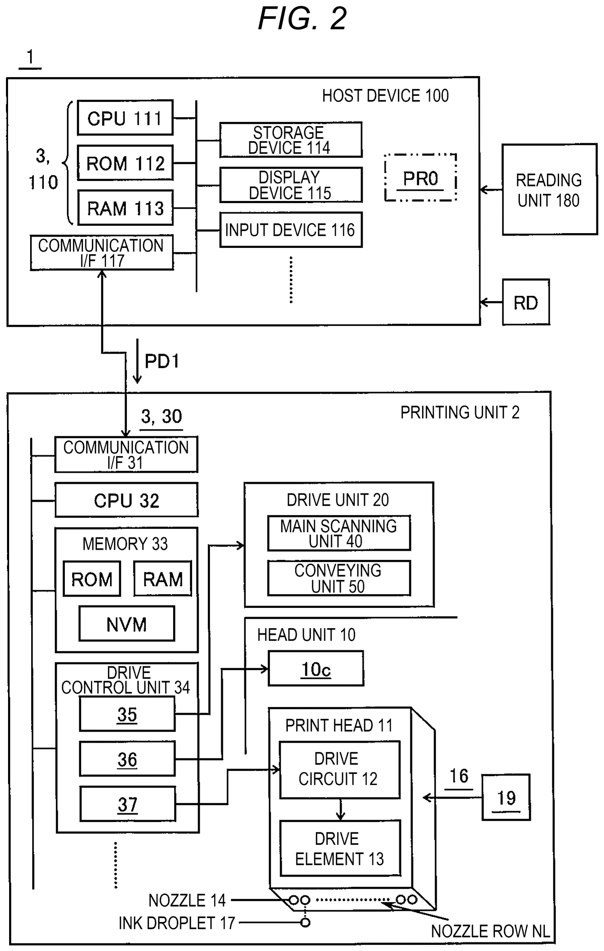

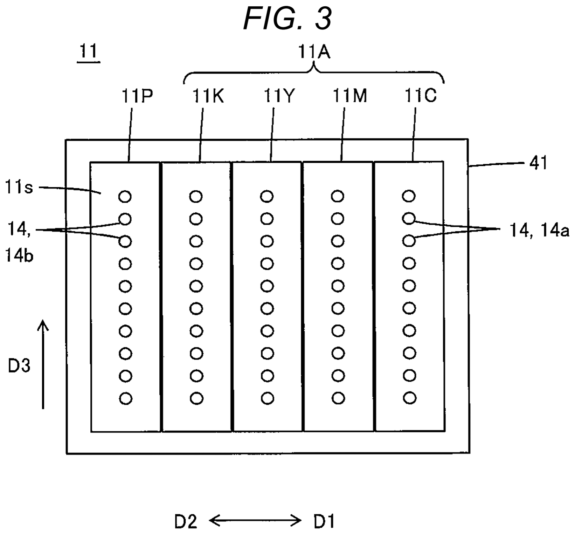

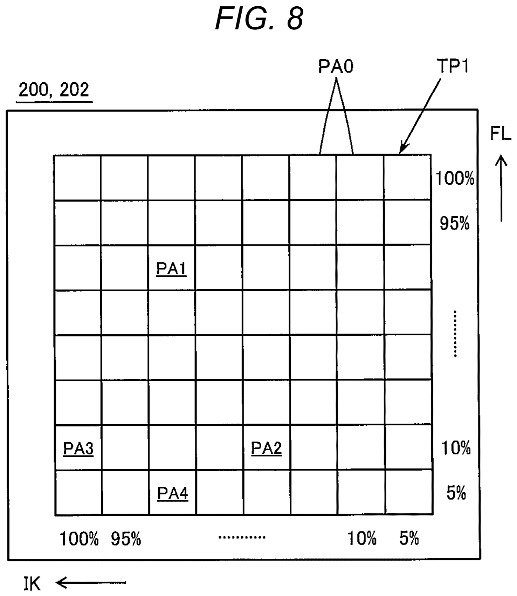

FIGS. 1 and 2 schematically show the configuration of the printing system 1 including a host device 100 and a printing unit 2. The printing system 1 may include the reading unit 180 for reading the test pattern TP1 (see FIGS. 7 and 8). FIG. 3 schematically shows a nozzle surface 11s of the print head 11. FIG. 4 schematically shows a state in which the first image IM1 is formed at the first surface 201 of the medium 200 and the second image IM2 is formed at the second surface 202 of the medium 200 by ejecting the ink 16 and the functional liquid 26 onto the first surface 201 of the medium 200.

FIGS. 1 and 2 show a serial type inkjet printer as an example of the printing unit 2. A Y-axis direction shown in FIG. 1 indicates a feeding direction D3, in which the medium 200 is conveyed. An X-axis direction shown in FIG. 1 indicates a first scanning direction D1 shown in FIGS. 3 and 4 and indicates a width direction intersecting the feeding direction D3 in the medium 200. Each of the X-axis direction and Y-axis direction may be a horizontal direction as shown in FIG. 1, or may be a direction different from the horizontal direction such as an up-down direction. In this specific example, the Y-axis direction and the X-axis direction are orthogonal to each other, and the Y-axis direction and the X-axis direction may intersect at an angle other than 90°. A Z-axis direction shown in FIG. 1 indicates a vertical direction intersecting the X-axis direction and the Y-axis direction, and is orthogonal to the X-axis direction and the Y-axis direction in the specific example. The Z-axis direction may be a direction different from the vertical direction, such as the horizontal direction.

The medium 200 shown in FIG. 1 is a thin print substrate into which the ink 16 and the functional liquid 26 can permeate, and has the first surface 201 and the second surface 202 on the opposite side from the first surface. When the first surface 201 is the front of the medium 200, the second surface 202 is the back of the medium 200, and when the first surface 201 is the back of the medium 200, the second surface 202 is the front of the medium 200. From the viewpoint of forming the second image IM2 on the second surface 202 by ejecting the ink 16 onto the first surface 201, the medium 200 is preferably a thin print substrate such as a thin fabric into which the ink 16 is likely to permeate. As the medium 200, fabric such as knitted fabric or woven fabric, nonwoven fabric, paper, or the like can be used. For example, since the fabric is formed of a large number of fibers, the ink 16 and the functional liquid 26 can permeate the fabric. The medium 200 shown in FIG. 1 is an elongated print substrate supplied in a state of being wound in a roll shape. The printing unit 2 shown in FIGS. 1 and 2 includes a drive unit 20 to which a head unit 10 is attached, a print control unit 30 that controls an operation of the printing unit 2, and the like. The printing unit 2 that receives print data PD1 from the host device 100 controls the head unit 10 and the drive unit 20 by the print control unit 30 according to the print data PD1, and prints the images (IM1 and IM2) on the medium 200.

The head unit 10 shown in FIG. 2 includes the print head 11, which is an inkjet head, and a head control unit 10c, which controls the print head 11. As shown in FIGS. 1 and 3, the head unit 10 is mounted on a carriage 41 that is movable in the first scanning direction D1 and a second scanning direction D2 opposite to the first scanning direction D1, and reciprocates with the carriage 41. The drive unit 20 changes a relative position of the print head 11 with respect to the medium 200 at least in the first scanning direction D1 and the second scanning direction D2.

The print head 11 shown in FIGS. 2 to 4 includes an ink head 11A capable of ejecting the ink 16 including a color component such as a pigment or a dye, and a functional liquid head 11P capable of ejecting the functional liquid 26 that changes the color development state of the second surface 202 by the ink 16. The ink 16 is a color ink containing a coloring material such as a pigment or a dye as a dispersoid or a solute in a liquid (for example, water) as a dispersion medium or a solvent. From the viewpoint of forming the second image IM2 on the second surface 202 by ejecting the ink 16 onto the first surface 201, the ink 16 preferably has low viscosity. The ink head 11A includes, for example, a C ink head 11C capable of ejecting a C (cyan) ink, an M ink head 11M capable of ejecting an M (magenta) ink, a Y ink head 11Y capable of ejecting a Y (yellow) ink, and a K ink head 11K capable of ejecting a K (black) ink.

The functional liquid 26 means a liquid having a predetermined function for assisting the formation of an image by the colored ink 16. More specifically, the functional liquid 26 means a liquid that acts on the colored ink 16 and promotes aggregation or penetration of the colored ink 16 to a medium surface with respect to the medium 200 as compared with a case in which the functional liquid 26 is not used. The functional liquid is also referred to as functional ink.

The ink 16 may be a pigment ink containing a dispersed pigment as a color component. As the pigment ink, for example, a liquid containing a dispersion medium such as water, a pigment as a dispersoid, and a surfactant can be used. When the ink 16 is a pigment ink, the functional liquid 26 may be a treatment liquid containing an aggregating agent that aggregates the pigment in the pigment ink. In a region of the first surface 201 where an ejection amount of the treatment liquid is relatively large, the pigment in the pigment ink is likely to stay on the first surface 201 side, and thus the color of the first surface 201 is darker and the color of the second surface 202 is lighter than in other regions. In a region of the first surface 201 where the ejection amount of the treatment liquid is relatively small, the pigment in the pigment ink is likely to move from the first surface 201 to the second surface 202 side, and thus the color of the first surface 201 is lighter and the color of the second surface 202 is darker as compared with other regions. As the treatment liquid, for example, a liquid containing a solvent such as water, a cationic compound as an aggregating agent, and a surfactant can be used. Examples of the cationic compound include polyvalent metal salts, organic acids, cationic resins, and cationic surfactants.

The ink 16 may be a dye ink containing a dye as a color component. As the dye ink, for example, a liquid containing a solvent such as water, a dye as a solute, and a surfactant can be used. When the ink 16 is a dye ink, the functional liquid 26 may be a penetrant liquid that assists the dye ink in permeating the medium 200. In a region of the first surface 201 where an ejection amount of the penetrant liquid is relatively small, a dye component in the dye ink is likely to stay on the first surface 201 side, and thus the color of the first surface 201 is darker and the color of the second surface 202 is lighter than in other regions. In a region of the first surface 201 where the ejection amount of the penetrant liquid is relatively large, the dye component in the dye ink is likely to move from the first surface 201 to the second surface 202 side, and thus the color of the first surface 201 is lighter and the color of the second surface 202 is darker as compared with other regions. From the viewpoint of forming the second image IM2 on the second surface 202 by ejecting the ink 16 onto the first surface 201, the viscosity of the penetrant liquid is preferably lower than the viscosity of the ink 16. As the penetrant liquid, for example, a liquid containing a solvent such as water or an organic solvent such as a glycol-based solvent, or the like can be used. Examples of the organic solvent that can be used as the glycol-based solvent include ethylene glycol, 1,3-propanediol, and 1,3-butanediol.

The functional liquid 26 may be a clear ink having no color component. In this case, the ink 16 may be a pigment ink or a dye ink. In a region of the first surface 201 where the ejection amount of the clear ink is relatively small, the color component in the ink 16 is likely to stay on the first surface 201 side, and thus the color of the first surface 201 is darker and the color of the second surface 202 is lighter than in other regions. In a region of the first surface 201 where the ejection amount of the clear ink is relatively large, the color component in the ink 16 is likely to move from the first surface 201 to the second surface 202 side, and thus the color of the first surface 201 is lighter and the color of the second surface 202 is darker as compared with other regions. From the viewpoint of forming the second image IM2 on the second surface 202 by ejecting the ink 16 onto the first surface 201, the viscosity of the clear ink is preferably lower than the viscosity of the ink 16. A liquid containing a dispersion medium such as water, a surfactant, and the like can be used for the clear ink.

In the following specific example, the ink 16 is a pigment ink, and the functional liquid 26 is a treatment liquid.

As shown in FIGS. 2 and 3, each of individual heads (11C, 11M, 11Y, 11K, and 11P) includes a nozzle row NL in which a plurality of nozzles 14 are arranged in a nozzle arrangement direction intersecting the first scanning direction D1, for example, the feeding direction D3, and includes a drive circuit 12, a drive element 13, and the like. The plurality of nozzles 14 included in each nozzle row NL may be arranged in a direction deviated from the feeding direction D3 or may be arranged in a staggered manner. Each of the first nozzle 14a of the ink head 11A can eject the colored ink 16 as an ink droplet 17, and each of the second nozzles 14b of the functional liquid head 11P can eject the functional liquid 26 as a functional liquid droplet 27. The drive circuit 12 applies a voltage signal to each of the drive elements 13 according to a drive signal input from the print control unit 30. As the drive element 13, a piezoelectric element that applies a pressure to the ink 16 or the functional liquid 26 in a pressure chamber communicating with the nozzles 14, a drive element that generates air bubbles in the pressure chamber by heat and ejects the ink droplets 17 or the functional liquid droplets 27 from the nozzles 14, or the like can be used. Of course, the method of ejecting liquid droplets such as the ink droplets 17 and the functional liquid droplets 27 is not limited to these, and may be, for example, a method in which the ink is continuously ejected in a liquid droplet shape from the nozzle by a strong electric field between the nozzle and an acceleration electrode disposed in front of the nozzle, and printing is performed by giving a printing information signal from a deflection electrode while the liquid droplets fly. In addition, a method of ejecting the liquid droplets may be an electrostatic attraction method, a mechanical vibration method, or the like. In the electrostatic attraction method, liquid droplets are ejected in response to the printing information signal without being deflected. The mechanical vibration method is a method in which a pressure is applied to the ink by a small pump and a nozzle is mechanically vibrated by a crystal oscillator or the like to forcibly eject liquid droplets.

The ink 16 and the functional liquid 26 are supplied to the pressure chamber of the print head 11 by a liquid supply unit 19. The liquid supply unit 19 includes a tank for the ink 16 and the functional liquid 26, a supply path for supplying the ink 16 and the functional liquid 26 from the tank to the print head 11, and the like. The tank, the supply path, and the supply path to the nozzle 14 are provided independently for each of the plurality of types of ink 16 and the functional liquid 26. The ink 16 or the functional liquid 26 in the pressure chamber is ejected as the liquid droplets from the nozzle 14 toward the first surface 201 of the medium 200 by the drive element 13. Under the control of the print control unit 30, the head unit 10 ejects the liquid droplets from the nozzles 14 of the nozzle row NL onto the medium 200 on a platen 55 while the conveyance is stopped while moving in the first scanning direction D1 or the second scanning direction D2, thereby printing the images (IM1 and IM2) on the medium 200.

Although the supply of the functional liquid 26 is not shown in FIG. 2, the process until the functional liquid 26 is supplied from the liquid supply unit 19 to the print head 11 and ejected as the functional liquid droplets 27 may be regarded as the same as the process until the ink 16 is supplied from the liquid supply unit 19 to the print head 11 and ejected as the ink droplets 17.

The drive unit 20 includes a main scanning unit 40, a conveying unit 50, and the like, and moves the head unit 10 and the medium 200 relative to each other under the control of the print control unit 30. The main scanning unit 40 in the present specific example includes a carriage 41, a guide shaft 42, a carriage motor (not shown), and the like, and moves the head unit 10 in the first scanning direction D1 and the second scanning direction D2 under the control of the print control unit 30. The guide shaft 42 is disposed with its longitudinal direction oriented in the first scanning direction D1, and supports the carriage 41 movably in the first scanning direction D1 and the second scanning direction D2. The carriage motor (not shown) reciprocates the carriage 41 along the guide shaft 42. Therefore, the main scanning unit 40 moves the print head 11 in the first scanning direction D1 and the second scanning direction D2 under the control of the print control unit 30. The conveying unit 50 in the present specific example includes a medium supply unit 51, a medium storage 52, a plurality of conveyance rollers 53, the platen 55, and the like, and moves the medium 200 in the feeding direction D3 under the control of the print control unit 30. The medium supply unit 51 rotatably supports a reel around which the medium 200 is wound into a roll, and feeds the medium 200 to a conveyance path. The medium storage 52 rotatably supports a reel that winds the medium 200, and winds the medium 200 on which printing is performed from the conveyance path. The plurality of conveyance rollers 53 include a driving roller that moves the medium 200 in the feeding direction D3, a driven roller that rotates as the medium 200 moves, and other rollers. The medium 200 supplied from the medium supply unit 51 to the conveyance path is conveyed via a printing region on the platen 55 and wound around the reel in the medium storage 52.

When the printing unit 2 performs lateral printing, the carriage 41, on which the print head 11 is mounted, may move in the feeding direction D3 and a secondary scanning direction opposite the feeding direction D3. In addition, the printing unit 2 may be a line type inkjet printer which does not include the carriage 41 and includes a print head having a nozzle row over the entire width of the medium 200.

The print control unit 30 includes a communication interface (I/F) 31, a central processing unit (CPU) 32, which is a processor, a memory 33, a drive control unit 34, and the like, and controls an operation of the printing unit 2. The communication I/F 31, the CPU 32, the memory 33, and the drive control unit 34 can input and output information to and from each other by being electrically coupled to each other. The memory 33 includes, for example, a read only memory (ROM) that is a semiconductor memory, a random access memory (RAM) that is a semiconductor memory, and a nonvolatile memory (NVM). As the NVM, a nonvolatile semiconductor memory such as a flash memory, a magnetic storage device such as a hard disk, or the like can be used. The memory 33 is a storage medium that secures an area for storing a program in which the CPU 32 operates, a work area in which the CPU 32 operates, and the like.

The print control unit 30 may be implemented with a system on a chip (SoC) or the like, and may include an application specific integrated circuit (ASIC).

The communication I/F 31 is connected to a communication I/F 117 of the host device 100. The communication I/Fs 31 and 117 perform bidirectional data communication. The CPU 32 controls the head unit 10 and the drive unit 20 via the drive control unit 34 by executing a program stored in the memory 33. The drive control unit 34 includes a movement control signal generation circuit 35, an ejection control signal generation circuit 36, and a drive signal generation circuit 37, and controls the operations of the head unit 10 and the drive unit 20 under the control of the CPU 32. The movement control signal generation circuit 35 generates a movement control signal, which is used to control the main scanning unit 40 and the conveying unit 50, according to an instruction from the CPU 32, and outputs the signal to the drive unit 20. The ejection control signal generation circuit 36 generates a head control signal for selecting the nozzle for ejecting the ink 16 or the functional liquid 26, selecting the ejection amount, controlling an ejection timing, and the like based on the print data PD1 according to the instruction from the CPU 32, and outputs the signal to the head control unit 10c of the head unit 10. The drive signal generation circuit 37 generates drive signals to be used to drive the drive elements 13 of the print head 11, and outputs the signals to the drive circuit 12. The drive control unit 34 drives the drive elements 13 corresponding to the respective nozzles 14 based on the head control signal and the drive signals.

The host device 100 shown in FIGS. 1 and 2 includes a CPU 111, a ROM 112, a RAM 113, a storage device 114, a display device 115, an input device 116, a communication I/F 117, and the like. The elements 111 to 117 and the like are electrically coupled to each other, and can therefore each input information from any of the other elements and output information to any of the other elements. The CPU 111, the ROM 112, and the RAM 113 are included in a host-side control unit 110. In the specific example, the host-side control unit 110 and the print control unit 30 constitute the control unit 3. The display device 115 is an example of a display unit. The reading unit 180 may be coupled to the host device 100. Examples of the host device 100 include a computer such as a personal computer (including a tablet terminal), a mobile phone such as a smartphone, and a digital still camera. The host device 100 may include the elements 111 to 117 and the like in a single housing, or may be implemented by a plurality of devices separate from each other but communicative with each other. The host device 100 and the printing unit 2 may be present in a common housing. The printing system 1 can also be called a printing device.

The storage device 114 stores an operating system, various driver programs including a print control program PRO, application programs, setting information, and the like. The CPU 111 reads information stored in the storage device 114 as appropriate into the RAM 113 and executes the read programs to perform various kinds of processing. As the storage device 114, a nonvolatile semiconductor memory such as a flash memory, a magnetic storage device such as a hard disk, or the like can be used. A computer-readable medium that stores the print control program PRO is not limited to a storage device inside the host device 100, and may be the recording medium RD outside the host device 100. The display device 115 is a human interface that displays information, and can, for example, be a liquid crystal display panel. The input device 116 is a human interface to which information is input, and can, for example, be a pointing device, hardware keys including a keyboard, or a touch panel attached to the surface of a display panel.

The reading unit 180 can read the test pattern TP1 shown in FIGS. 7 and 8 and output the reading result of the test pattern TP1 to the host device 100. Examples of the reading unit 180 include a scanner such as a flat bed scanner, a camera, and a colorimeter. When the host device 100 acquires the reading result of the test pattern TP1 from the reading unit 180, the host device 100 can acquire a read value indicating the density of each patch PA0 of the test pattern TP1.

Incidentally, as double-sided printing of the medium 200, it is conceivable to form a print image on a back surface of the medium 200 by ejecting the ink onto the back surface, then reverse the medium 200, and form a print image on the front surface of the medium 200 by ejecting the ink onto the front surface. However, since turning over the medium 200 requires a user operation and a medium reversing mechanism on a conveyance path, there is room for improvement in terms of throughput. When the medium 200 is thin, an image printed on the back surface may appear lightly on the front surface, an image printed on the front surface may appear lightly on the back surface, the images on both surfaces may interfere with each other, and an intended print image may not be formed.

In the specific example, for example, attention is paid to the fact that an image can be formed not only on the front surface but also on the back surface by the ink 16 ejected onto the front surface of the medium 200, and a desired print image is formed on both surfaces of the medium 200 by ejecting the ink 16 onto only one surface of the medium 200. At this time, desired print images are formed on both surfaces of the medium 200 by ejecting the ink 16 from the first nozzle 14a onto the first surface 201 of the medium 200 according to the ink ejection amount IK and ejecting the functional liquid 26 from the second nozzle 14b onto the first surface 201 of the medium 200 according to the functional liquid ejection amount FL.

First, an example in which the print images are formed on both surfaces of the medium 200 by ejecting a pigment ink and a treatment liquid onto one surface of the medium 200 will be described with reference to FIG. 4.

In a first step ST11, the print control unit 30 shown in FIGS. 1 and 2 ejects the functional liquid droplet 27 from the second nozzle 14b of the functional liquid head 11P onto the first surface 201 of the medium 200 while moving the print head 11 in the first scanning direction D1 or the second scanning direction D2. At this time, the print control unit 30 ejects the functional liquid 26, that is, a treatment liquid from the second nozzle 14b so that the functional liquid ejection amount FL (see FIG. 5), which is the amount of the functional liquid 26 ejected from the second nozzle 14b per unit area of the first surface 201, can be changed according to an instruction from the host device 100. As a result, the treatment liquid corresponding to the functional liquid ejection amount FL is present on the first surface 201.

In a second step ST12, the print control unit 30 ejects the ink droplet 17 from the first nozzle 14a of the ink head 11A to the first surface 201 of the medium 200 while moving the print head 11 in the first scanning direction D1 or the second scanning direction D2. At this time, the print control unit 30 ejects the ink 16, that is, the pigment ink from the first nozzle 14a so that the ink ejection amount IK (see FIG. 5), which is an amount of the ink 16 ejected from the first nozzle 14a per unit area of the first surface 201, can be changed according to an instruction from the host device 100. An amount of the pigment contained in the pigment ink corresponding to the functional liquid ejection amount FL is aggregated on a first surface 201 side, and a part of the pigment permeates a second surface 202 side. As a result, the density is formed at the first surface 201 according to the functional liquid ejection amount FL and the ink ejection amount IK, and the density is also formed at the second surface 202 according to the functional liquid ejection amount FL and the ink ejection amount IK.

The ejection of the functional liquid 26 and the ejection of the ink 16 may be performed in different main scans or may be performed in the same main scan. The ink 16 is ejected from the first nozzle 14a onto the first surface 201, and then the ink 16 may be ejected from the second nozzle 14b onto the second surface 202.

When steps ST11 and ST12 are completed, the first image IM1 is formed in the printing region A0 of the first surface 201, and the second image IM2 is formed in the printing region A0 of the second surface 202 (step ST13). The printing region A0 is a region where the ink 16 and the functional liquid 26 are ejected onto the first surface 201. The first image IM1 is an image visually recognized when the first surface 201 is viewed, and is formed by ejecting the ink 16 and the functional liquid 26 onto the first surface 201. In the first image IM1 shown in FIG. 4, a dark first portion PT1 and a light second portion PT2 are formed according to the functional liquid ejection amount FL and the ink ejection amount IK. The second image IM2 is an image visually recognized when the second surface 202 is viewed, and is not formed by ejecting the ink 16 onto the second surface 202, and is formed by ejecting the ink 16 and the functional liquid 26 onto the first surface 201. In the second image IM2 shown in FIG. 4, the dark third portion PT3 and the light fourth portion PT4 are formed according to the functional liquid ejection amount FL and the ink ejection amount IK. The printing method in the specific example has a feature that a density pattern of the second image IM2 can be a pattern different from the density pattern of the first image IM1.

Hereinafter, an example of a printing method of collectively forming the first image IM1 of the first surface 201 and the second image IM2 of the second surface 202 by ejecting the ink 16 and the functional liquid 26 onto the first surface 201 will be described with reference to FIG. 5.

FIG. 5 schematically shows a method of generating the print data PD1 obtained by combining the first image IM1 on the first surface 201 and the second image IM2 on the second surface 202 and performing printing.

In a first step ST21, the host-side control unit 110 shown in FIG. 2 performs first processing of receiving settings of the first image IM1 to be formed at the first surface 201 of the medium 200 and the second image IM2 to be formed at the second surface 202 of the medium 200. The host-side control unit 110 may cause the display device 115 to display the images (IM1 and IM2). The step ST21 is an example of the first step ST1. Here, the first image IM1 may include the first portion PT1 having a predetermined density and the second portion PT2 that is lighter than the first portion PT1. The second image IM2 may include the third portion PT3 having a predetermined density and the fourth portion PT4 that is lighter than the third portion PT3. The density pattern of the second image IM2 may be different from the density pattern of the first image IM1.

Both of the images (IM1 and IM2) may be binary images or ternary or more images. The host-side control unit 110 may receive an input of a first original image having three or more values and convert the first original image into the first image IM1 having two values, or may receive an input of a second original image having three or more values and convert the second original image into the second image IM2 having two values. Since the first image IM1 and the second image IM2 are simultaneously formed, the first portion PT1, the second portion PT2, the third portion PT3, and the fourth portion PT4 are set to the same color or set to colors of the same system. The print color may be a single color that is any one of C, M, Y, and K, or a mixed color that is a combination of two or more of C, M, Y, and K.

In a second step ST22, the host-side control unit 110 divides the printing region A0, which is a combination of the first image IM1 and the second image IM2, into four partial regions (AA, AB, AC, AD). In the first partial region AA, the relatively dark first portion PT1 in the first image IM1 and the relatively light fourth portion PT4 in the second image IM2 overlap each other. In the second partial region AB, the relatively light second portion PT2 in the first image IM1 and the relatively light fourth portion PT4 in the second image IM2 overlap each other. In the third partial region AC, the relatively dark first portion PT1 in the first image IM1 and the relatively dark third portion PT3 in the second image IM2 overlap each other. In the fourth partial region AD, the relatively light second portion PT2 in the first image IM1 and the relatively dark third portion PT3 in the second image IM2 overlap each other. The printing region A0 includes these partial regions (AA, AB, AC, AD). Since the ink 16 and the functional liquid 26 are ejected only onto the first surface 201, the second image IM2 is aligned with the first image IM1 in a state of being horizontally or vertically inverted.

In the third step ST23, the host-side control unit 110 assigns the ink ejection amount IK and the functional liquid ejection amount FL to the four partial regions (AA, AB, AC, AD). The host-side control unit 110 assigns, to the first partial region AA, the first ink ejection amount IK1 as the ink ejection amount IK and the first functional liquid ejection amount FL1 as the functional liquid ejection amount FL. The host-side control unit 110 assigns, to the second partial region AB, the second ink ejection amount IK2 as the ink ejection amount IK and the second functional liquid ejection amount FL2 as the functional liquid ejection amount FL. The host-side control unit 110 assigns, to the third partial region AC, the third ink ejection amount IK3 as the ink ejection amount IK and the third functional liquid ejection amount FL3 as the functional liquid ejection amount FL. The host-side control unit 110 assigns, to the fourth partial region AD, the fourth ink ejection amount IK4 as the ink ejection amount IK and the fourth functional liquid ejection amount FL4 as the functional liquid ejection amount FL.

As described above, in order to form the first image IM1 on the first surface 201 and the second image IM2 on the second surface 202 by ejecting the ink 16 and the functional liquid 26 onto the first surface 201, the control unit 3 assigns, to each part of the printing region A0, the ink ejection amount IK and the functional liquid ejection amount FL according to the density of the first image IM1 and the density of the second image IM2. Steps ST22 to ST23 are an example of the second step ST2.

In a fourth step ST24, the host-side control unit 110 generates the print data PD1 by combining the ejection amounts (IK, FL) of the four partial regions (AA, AB, AC, AD) and transmits the print data PD1 to the printing unit 2. In a fifth step ST25, the print control unit 30 controls the print head 11 so that the ink 16 and the functional liquid 26 are ejected onto the first surface 201 according to the ejection amounts (IK, FL) assigned to the partial regions (AA, AB, AC, AD). When the nozzles (14a, 14b) eject the ink 16 and the functional liquid 26 onto the first surface 201, the first image IM1 is formed at the first surface 201, and at the same time, the second image IM2 is formed at the second surface 202. The first image IM1 and the second image IM2 can express different designs on the first surface 201 and the second surface 202.

As described above, the control unit 3 controls the print head 11 so that the ink 16 and the functional liquid 26 are ejected onto the first surface 201 according to the ink ejection amount IK and the functional liquid ejection amount FL assigned to each part of the printing region A0. Steps ST24 to ST25 are an example of the third step ST3.

FIGS. 6A and 6B schematically show the ejection amount (IK, FL) of each of the partial regions, the functional liquid amount regions (AF1 and AF2), and the ink amount regions (AI1 to AI4) of the printing region A0 when the ink 16 is the pigment ink and the functional liquid 26 is the treatment liquid.

The ejection amount (IK, FL) of each of the partial regions is set to satisfy the following conditions.

(Conditions for the first image IM1) The first partial region AA and the third partial region AC have substantially the same density, the second partial region AB and the fourth partial region AD have substantially the same density, and the first partial region AA and the third partial region AC are darker than the second partial region AB and the fourth partial region AD.

(Conditions for the second image IM2) The third partial region AC and the fourth partial region AD have substantially the same density, the first partial region AA and the second partial region AB have substantially the same density, and the third partial region AC and the fourth partial region AD are darker than the first partial region AA and the second partial region AB.

FIG. 6A shows that the first ink ejection amount IK1 is 85%, the first functional liquid ejection amount FL1 is 60%, the second ink ejection amount IK2 is 65%, the second functional liquid ejection amount FL2 is 10%, the third ink ejection amount IK3 is 99%, the third functional liquid ejection amount FL3 is 10%, the fourth ink ejection amount IK4 is 85%, and the fourth functional liquid ejection amount FL4 is 5%.

For example, when a threshold value TFL for the functional liquid ejection amount FL is 40%, the printing region A0 is divided into the first partial region AA as the first functional liquid amount region AF1 in which the functional liquid ejection amount FL exceeds the threshold value TFL, and the partial regions (AB, AC, AD) as the second functional liquid amount region AF2 in which the functional liquid ejection amount FL does not exceed the threshold value TFL. Therefore, the printing region A0 includes the first functional liquid amount region AF1 in which the functional liquid ejection amount FL is the first ejection amount of 60%, and the second functional liquid amount region AF2 in which the functional liquid ejection amount FL is the second ejection amount of 5% to 10% that is lower than the first ejection amount of 60%.

When the threshold value TIK for the ink ejection amount IK is 70%, the second functional liquid amount region AF2 is divided into the partial regions (AC, AD) as the third ink amount region AI3 in which the ink ejection amount IK exceeds the threshold value TIK, and the second partial region AB in which the ink ejection amount IK does not exceed the threshold value TIK. Therefore, the second functional liquid amount region AF2 includes the third ink amount region AI3 in which the ink ejection amount IK is the fifth ejection amount of 85% to 99%, and the fourth ink amount region AI4 in which the ink ejection amount IK is the sixth ejection amount of 65% that is lower than the fifth ejection amount of 85% to 99%.

FIG. 6B shows that the first ink ejection amount IK1 is 85%, the first functional liquid ejection amount FL1 is 100%, the second ink ejection amount IK2 is 65%, the second functional liquid ejection amount FL2 is 50%, the third ink ejection amount IK3 is 99%, the third functional liquid ejection amount FL3 is 50%, the fourth ink ejection amount IK4 is 85%, and the fourth functional liquid ejection amount FL4 is 10%.

For example, when the threshold value TFL for the functional liquid ejection amount FL is 40%, the printing region A0 is divided into the partial regions (AA, AB, AC) as the first functional liquid amount region AF1 in which the functional liquid ejection amount FL exceeds the threshold value TFL and the fourth partial region AD as the second functional liquid amount region AF2 in which the functional liquid ejection amount FL does not exceed the threshold value TFL. Therefore, the printing region A0 includes the first functional liquid amount region AF1 in which the functional liquid ejection amount FL is the first ejection amount of 50% to 100%, and the second functional liquid amount region AF2 in which the functional liquid ejection amount FL is the second ejection amount of 10% that is lower than the first ejection amount of 50% to 100%.

When the threshold value TIK for the ink ejection amount IK is 70%, the first functional liquid amount region AF1 is divided into the partial regions (AA, AC) as the first ink amount region AI1 in which the ink ejection amount IK exceeds the threshold value TIK, and the second partial region AB as the second ink amount region AI2 in which the ink ejection amount IK does not exceed the threshold value TIK. Therefore, the first functional liquid amount region AF1 includes the first ink amount region AI1 in which the ink ejection amount IK is the third ejection amount of 85% to 99%, and the second ink amount region AI2 in which the ink ejection amount IK is the fourth ejection amount of 65% that is lower than the third ejection amount of 85% to 99%.

When the ink 16 is the pigment ink and the functional liquid 26 is the treatment liquid, as shown in FIGS. 6A and 6B, the fourth functional liquid ejection amount FL4 in the fourth partial region AD is lower than the first functional liquid ejection amount FL1 in the first partial region AA. In the first partial region AA in which the ejection amount of the treatment liquid is high, the pigment in the ink 16 is likely to be fixed to the first surface 201 of the medium 200 by a relatively large amount of the aggregating agent in the treatment liquid. Therefore, the first partial region AA in the first image IM1 is the relatively dark first portion PT1, and the first partial region AA in the second image IM2 is the relatively light fourth portion PT4. In the fourth partial region AD in which the ejection amount of the treatment liquid is low, the ink 16 is likely to permeate the medium 200. Therefore, the fourth partial region AD in the first image IM1 is the relatively light second portion PT2, and the fourth partial region AD in the second image IM2 is the relatively dark third portion PT3.

As described above, it is possible to control the density of each part of the images (IM1 and IM2) on both surfaces of the medium 200 by a level of the ejection amount of the treatment liquid.

An optimum value of the ejection amount (IK, FL) of each of the partial regions differs depending on the type of the medium 200, the type of the ink 16, the type of the functional liquid 26, a print resolution, and the like. As shown in FIGS. 7 and 8, the control unit 3 in the present specific example performs control of forming the test pattern TP1 for determining the ejection amount (IK, FL) of each of the partial regions on the medium 200.

FIG. 7 schematically shows the first surface 201 side of the test pattern TP1 including a plurality of patches PA0 having different combinations of the ink ejection amount IK and the functional liquid ejection amount FL. FIG. 8 schematically shows the second surface 202 side of the test pattern TP1 including the plurality of patches PA0 having different combinations of the ink ejection amount IK and the functional liquid ejection amount FL. In FIGS. 7 and 8, the ink ejection amount IK and the functional liquid ejection amount FL are shown for convenience. For convenience of illustration, in the test pattern TP1 shown in FIGS. 7 and 8, some of the plurality of patches PA0 in which the ink ejection amount IK and the functional liquid ejection amount FL are in increments of 5% are omitted. In the plurality of patches PA0 of the first surface 201 shown in FIG. 7, the ink ejection amount IK increases in increments of 5% toward a right side, and the functional liquid ejection amount FL increases in increments of 5% toward an upper side. The test pattern TP1 shown in FIGS. 7 and 8 is formed by ejecting the ink 16 and the functional liquid 26 onto the first surface 201 of the medium 200. Therefore, in the plurality of patches PA0 on the second surface 202 shown in FIG. 8, the ink ejection amount IK increases toward a left side, and the functional liquid ejection amount FL increases toward the upper side. In each of the patches PA0, densities corresponding to the ejection amount (IK, FL) occur on the first surface 201 and the second surface 202. The ink 16 used for the test pattern TP1 may be a single color or a mixed color having a constant mixing ratio over the entire test pattern TP1.

The plurality of patches PA0 included in the test pattern TP1 may be selected visually or may be read by the reading unit 180.

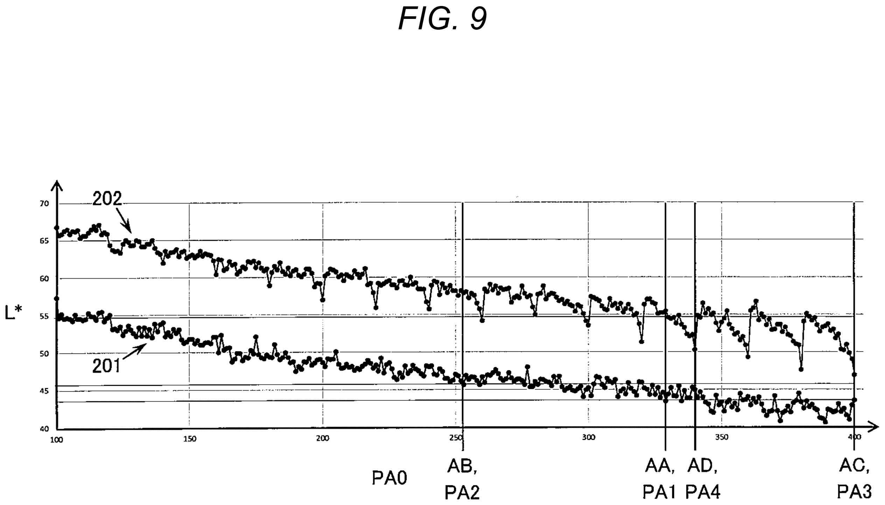

FIG. 9 schematically shows an example in which the ejection amount (IK, FL) of each of the partial regions is assigned from a reading result read by the reading unit 180. In FIG. 9, a horizontal axis represents an identification number of the patch PA0, a vertical axis represents a brightness L* of the patch PA0, an upper polygonal line represents the brightness L* of the second surface 202, and a lower polygonal line represents the brightness L* of the first surface 201. The brightness L* means the brightness L* in the International Commission on Illumination (CIE) L*a*b* color space. Hereinafter, "*" is omitted. The first surface 201 and the second surface 202 are lighter as the brightness L is higher and darker as the brightness L is lower. Therefore, the brightness L of the first surface 201 corresponds to the density of the first surface 201 of the patch PA0, and the brightness L of the second surface 202 corresponds to the density of the second surface 202 of the patch PA0.

For example, it is assumed that the first surfaces 201 of the patches PA1 and PA3 have substantially the same brightness L, the first surfaces 201 of the patches PA2 and PA4 have substantially the same brightness L and have higher brightness L than the first surfaces 201 of the patches PA1 and PA3, the second surfaces 202 of the patches PA3 and PA4 have substantially the same brightness L, and the second surfaces 202 of the patches PA1 and PA2 have substantially the same brightness L and have higher brightness L than the second surfaces 202 of the patches PA3 and PA4. In this case, the ejection amounts (IK, FL) of the patch PA1 can be determined as the ejection amounts (IK, FL) of the first partial region AA, the ejection amounts (IK, FL) of the patch PA2 can be determined as the ejection amounts (IK, FL) of the second partial region AB, the ejection amounts (IK, FL) of the patch PA3 can be determined as the ejection amounts (IK, FL) of the third partial region AC, and the ejection amounts (IK, FL) of the patch PA4 can be determined as the ejection amounts (IK, FL) of the fourth partial region AD.

### 3. Specific Example of Processing of Printing System:

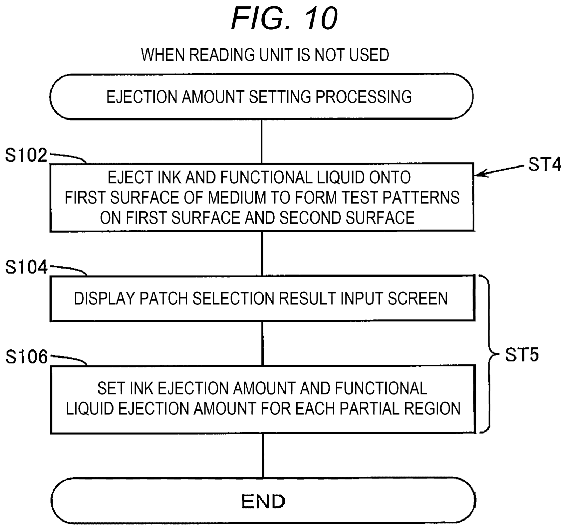

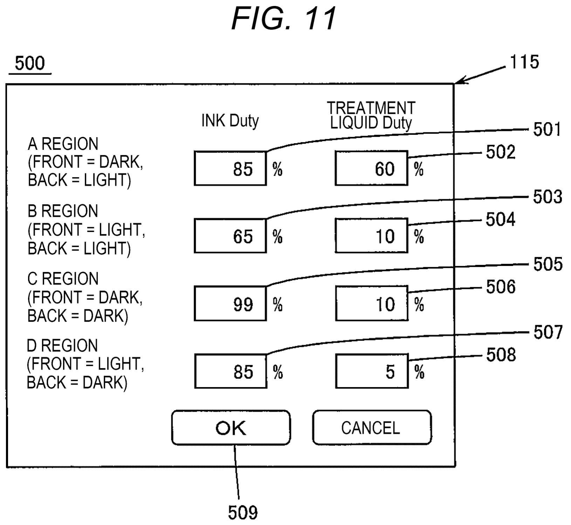

FIG. 10 schematically shows the ejection amount setting processing performed by the host-side control unit 110 (see FIG. 2) when the reading unit 180 is not used. FIG. 11 schematically shows an example of a patch selection result input screen 500 to be displayed on the display device 115 shown in FIGS. 1 and 2. When the host-side control unit 110 receives a setting instruction of the ejection amount (IK, FL) of each of the partial regions, the host-side control unit 110 starts the ejection amount setting processing. Here, step S102 corresponds to the fourth processing and the fourth step ST4, and steps S104 to S106 correspond to the fifth processing and the fifth step ST5. Hereinafter, the description of "step" may be omitted, and the signs of the steps may be shown in parentheses.

When the ejection amount setting processing is started, the host-side control unit 110 transmits test pattern print data for printing the test pattern TP1 including the plurality of patches PA0 to the printing unit 2, and causes the printing unit 2 to print the test pattern TP1 (S102). Upon receiving the test pattern print data, the printing unit 2 controls the print head 11 according to the test pattern print data so that the test pattern TP1 is formed on the medium 200 by ejecting the ink 16 and the functional liquid 26 onto the first surface 201. As a result, the test pattern TP1 as shown in FIGS. 7 and 8 is formed on the medium 200.

Next, the host-side control unit 110 causes the display device 115 to display the patch selection result input screen 500 as shown in FIG. 11 (S104).

The patch selection result input screen 500 shown in FIG. 11 has an input field 501 of the first ink ejection amount IK1, an input field 502 of the first functional liquid ejection amount FL1, an input field 503 of the second ink ejection amount IK2, an input field 504 of the second functional liquid ejection amount FL2, an input field 505 of the third ink ejection amount IK3, an input field 506 of the third functional liquid ejection amount FL3, an input field 507 of the fourth ink ejection amount IK4, an input field 508 of the fourth functional liquid ejection amount FL4, an OK button 509, and the like. The host-side control unit 110 can receive an operation of inputting the ejection amounts (IK, FL) to the input fields 501 to 508 via the input device 116. The user can view the test pattern TP1 shown in FIGS. 7 and 8, select the patches PA1 to PA4 from the test pattern TP1, and then input the ink ejection amounts (IK1 to IK4) and functional liquid ejection amounts (FL1 to FL4) corresponding to the patches PA1 to PA4 into the input fields 501 to 508 using the input device 116.

The first functional liquid ejection amount FL1 is preferably greater than the fourth functional liquid ejection amount FL4. Therefore, when the input value of the first functional liquid ejection amount FL1 is less than the input value of the fourth functional liquid ejection amount FL4, that is, when the input value of the fourth functional liquid ejection amount FL4 is equal to or greater than the input value of the first functional liquid ejection amount FL1, the host-side control unit 110 may display an error or control the OK button 509 to be inoperable. The first functional liquid ejection amount FL1 is preferably greater than all of the remaining functional liquid ejection amounts (FL2 to FL4). Therefore, when there is an input value equal to or greater than the input value of the first functional liquid ejection amount FL1 among the input values of the functional liquid ejection amounts (FL2 to FL4), the host-side control unit 110 may display an error or control the OK button 509 to be inoperable.

Upon receiving the operation of the OK button 509 via the input device 116, the host-side control unit 110 sets the ejection amounts input to the input fields 501 to 508 to the ink ejection amounts (IK1 to IK4) and the functional liquid ejection amounts (FL1 to FL4) (S106), and ends the ejection amount setting processing.

As described above, the host-side control unit 110 receives an input of the selection result of the patch PA0 to be associated with the first partial region AA, the second partial region AB, the third partial region AC, and the fourth partial region AD among the plurality of patches PA0. As will be described later, the host-side control unit 110 assigns the ink ejection amount IK and the functional liquid ejection amount FL corresponding to the selection result of the patch PA0 to the partial regions (AA, AB, AC, AD) by performing the print control processing shown in FIG. 13.

Although details will be described later, some of the input fields 501 to 508 can be omitted. Therefore, the host-side control unit 110 receives the input of the selection result of the patch PA0 corresponding to the partial region selected from the four partial regions (AA, AB, AC, and AD) from the plurality of patches PA0, and assigns the ejection amounts (IK, FL) corresponding to the selection result to the partial region.

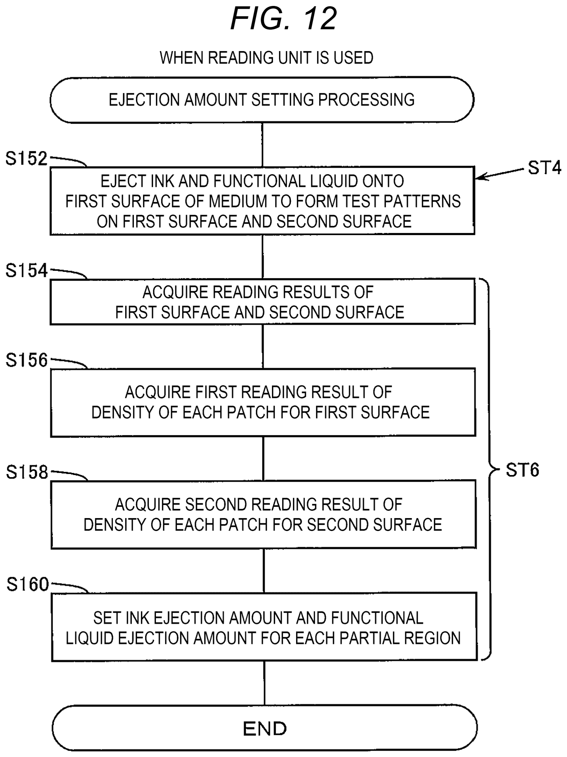

FIG. 12 schematically shows the ejection amount setting processing performed by the host-side control unit 110 when the reading unit 180 is used. When the host-side control unit 110 receives the setting instruction of the ejection amounts (IK, FL) of each of the partial region, the host-side control unit 110 starts the ejection amount setting processing shown in FIG. 12. Here, S152 corresponds to the fourth processing and the fourth step ST4, and steps S154 to S160 correspond to the sixth processing and the sixth step ST6.

When the ejection amount setting processing is started, the host-side control unit 110 performs the processing same as the processing of S102 shown in FIG. 10, and controls the printing unit 2 so that the test pattern TP1 is formed on the medium 200 by ejecting the ink 16 and the functional liquid 26 onto the first surface 201 (S152).

Next, the host-side control unit 110 acquires, from the reading unit 180, a reading result obtained by reading the test pattern TP1 formed at the first surface 201 using the reading unit 180 and a reading result obtained by reading the test pattern TP1 formed at the second surface 202 by the reading unit 180 (S154). The reading result may be the brightness L, a brightness value indicating brightness instead of the brightness L, or data that can be converted into the brightness L or the brightness value. When the reading unit 180 outputs RGB data representing a R (red) component, a G (green) component, and a B (blue) component of each of the patches PA0 to the host device 100, the host device 100 may convert a RGB value into the brightness L or the brightness value. The brightness value also corresponds to the density of images (IM1 and IM2), and the region is dark when the brightness value of the region is low, and the region is light when the brightness value of the region is high.

Next, the host-side control unit 110 acquires a first reading result indicating the density of each of the patches PA0 from the above-described reading result for the first surface 201 (S156). The first reading result is a result of reading the density, for example, the brightness L, of each of the patches PA0 formed at the first surface 201 by the reading unit 180, as indicated by a lower polygonal line in FIG. 9.

Next, the host-side control unit 110 acquires the second reading result indicating the density of each of the patches PA0 from the above-described reading result for the second surface 202 (S158). The second reading result is a result of reading the density, for example, the brightness L, of each of the patches PA0 formed at the second surface 202 by the reading unit 180, as indicated by an upper polygonal line in FIG. 9.

Finally, in order to satisfy the conditions for the first image IM1 and the second image IM2 described above, the host-side control unit 110 sets the ink ejection amounts (IK1 to IK4) and the functional liquid ejection amounts (FL1 to FL4) for the four partial regions (AA, AB, AC, and AD) (S160), and ends the ejection amount setting processing. Here, the determination of whether the two partial regions have substantially the same density may be, for example, a determination of whether the brightness L between the patches PA0 is equal to or less than a threshold value. When the brightness L between the patches PA0 is equal to or less than the threshold value, it can be determined that the two partial regions have substantially the same density, and when the brightness L between the patches PA0 exceeds the threshold value, it can be determined that the two partial regions have different densities.

As described above, the host-side control unit 110 determines the ink ejection amounts (IK1 to IK4) and the functional liquid ejection amounts (FL1 to FL4) based on the first reading result and the second reading result. As will be described later, the host-side control unit 110 assigns the determined ejection amounts (IK, FL) to the partial regions (AA, AB, AC, AD) by performing the print control processing shown in FIG. 13.

Only some of the ink ejection amounts (IK1 to IK4) and the functional liquid ejection amounts (FL1 to FL4) may be determined. Therefore, the host-side control unit 110 determines at least a part of the ink ejection amounts (IK1 to IK4) and the functional liquid ejection amounts (FL1 to FL4) based on the first reading result and the second reading result.

FIG. 13 schematically shows the print control processing performed by the host-side control unit 110 shown in FIG. 2. FIG. 14 schematically shows an example in which the printing is performed by inverting the second image IM2 and generating the print data PD1. The host-side control unit 110 starts the print control processing when receiving a print instruction on the medium 200. Here, S202 corresponds to the first processing and the first step ST1, S204 to S208 correspond to the second processing and the second step ST2, and S210 corresponds to the third processing and the third step ST3. In S204 to S208, a part of the fifth step ST5 is performed, and a part of the sixth step ST6 is performed.

When the print control processing starts, as shown in FIGS. 5 and 14, the host-side control unit 110 receives settings of the first image IM1 to be formed at the first surface 201 and the second image IM2 to be formed at the second surface 202 (S202). At this time, the host-side control unit 110 causes the display device 115 to display a user interface (UI) screen (not shown), and performs processing of displaying the images (IM1 and IM2) for which the settings are received on the UI screen. The host-side control unit 110 receives settings of the first image IM1 and the second image IM2 that can be displayed on the display device 115. For example, the host-side control unit 110 receives any one of the plurality of images stored in the storage device 114 or the like as the first image IM1 by the input device 116, and receives another one as the second image IM2 by the input device 116. When an original image is a ternary or more image, the host-side control unit 110 converts the original image into binary images (IM1 and IM2). In this way, the first image IM1 including the relatively dark first portion PT1 and the relatively light second portion PT2 and the second image IM2 including the relatively dark third portion PT3 and the relatively light fourth portion PT4 are set. In addition, the host-side control unit 110 also receives a setting of a color common to the images (IM1 and IM2).

FIG. 14 shows the first image IM1 having a character "WELCOME" and the second image IM2 having a character "THANK YOU".

As shown in FIG. 14, when the set second image IM2 represents a different appearance when inverted, it is necessary to invert the second image IM2 horizontally or vertically in order to combine the images (IM1 and IM2) as the print data PD1. Therefore, the host-side control unit 110 performs processing of inverting the second image IM2 as shown in FIG. 14 (S204). The host-side control unit 110 inverts the second image IM2 horizontally when the second surface 202 of the medium 200 is inverted horizontally during printing, and inverts the second image IM2 vertically when the second surface 202 of the medium 200 is inverted vertically during printing. FIG. 14 shows an example in which the second image IM2 having "THANK YOU" is inverted horizontally by the inversion processing of S204.

Next, as shown in FIG. 5, the host-side control unit 110 divides the printing region A0, which is the combination of the first image IM1 and the second image IM2, into four partial regions (AA, AB, AC, AD) (S206). As described above, in the first partial region AA, the dark portion of the first image IM1 and the light portion of the second image IM2 overlap each other, in the second partial region AB, the light portion of the first image IM1 and the light portion of the second image IM2 overlap each other, in the third partial region AC, the dark portion of the first image IM1 and the dark portion of the second image IM2 overlap each other, and in the fourth partial region AD, the light portion of the first image IM1 and the dark portion of the second image IM2 overlap each other.

Next, as shown in FIGS. 5 and 14, the host-side control unit 110 assigns the ink ejection amount IK and the functional liquid ejection amount FL to the four partial regions (AA, AB, AC, AD), and generates the print data PD1 in which the four partial regions (AA, AB, AC, AD) are combined (S208). The host-side control unit 110 assigns the first ink ejection amount IK1 and the first functional liquid ejection amount FL1 to the first partial region AA, assigns the second ink ejection amount IK2 and the second functional liquid ejection amount FL2 to the second partial region AB, assigns the third ink ejection amount IK3 and the third functional liquid ejection amount FL3 to the third partial region AC, and assigns the fourth ink ejection amount IK4 and the fourth functional liquid ejection amount FL4 to the fourth partial region AD.

As described above, the control unit 3 assigns the ink ejection amount IK and the functional liquid ejection amount FL to each part of the printing region A0 based on the first image IM1 and the inverted second image IM2. Referring to FIG. 6A, the control unit 3 assigns the first ejection amount of 60% to the first functional liquid amount region AF1, assigns the second ejection amount of 5% to 10% to the second functional liquid amount region AF2, assigns the third ejection amount of 85% to the first ink amount region AI1, assigns the fifth ejection amount of 85% to 99% to the third ink amount region AI3, and assigns the sixth ejection amount of 65% to the fourth ink amount region AI4. Referring to FIG. 6B, the control unit 3 assigns the first ejection amount of 50% to 100% to the first functional liquid amount region AF1, assigns the second ejection amount of 10% to the second functional liquid amount region AF2, assigns the third ejection amount of 85% to 99% to the first ink amount region AI1, assigns the fourth ejection amount of 65% to the second ink amount region AI2, and assigns the fifth ejection amount of 85% to the third ink amount region AI3.

Finally, the host-side control unit 110 transmits the print data PD1 to the printing unit 2 (S210), and ends the print control processing. The print control unit 30 controls the print head 11 so that the ink 16 and the functional liquid 26 are ejected onto the first surface 201 according to the ejection amount (IK, FL) for each of the partial regions included in the print data PD1. When the nozzles (14a, 14b) eject the ink 16 and the functional liquid 26 to the first surface 201, the first image IM1 including the relatively dark first portion PT1 and the relatively light second portion PT2 is formed at the first surface 201, and at the same time, the second image IM2 including the relatively dark third portion PT3 and the relatively light fourth portion PT4 is formed at the second surface 202. In the example shown in FIG. 14, the images (IM1 and IM2) in which "WELCOME" appears on the first surface 201 of the medium 200 and "THANK YOU" appears on the second surface 202 of the medium 200 are printed. As described above, the second image IM2 formed at the second surface 202 is not an image obtained by inverting the first image IM1 formed at the first surface 201, and is an image that does not depend on the first image IM1.

As described above, the second image IM2 formed at the second surface 202 of the medium 200 is not formed by ejecting the ink 16 onto the second surface 202, but is formed by the ink 16 ejected onto the first surface 201. Therefore, the image is printed simultaneously on both surfaces of the medium 200 by ejecting the ink 16 onto one surface of the medium 200. Therefore, in the specific example, a desired print image can be formed on both surfaces of the medium 200 by ejecting the ink 16 only onto one surface of the medium 200. As a result, an operation of turning over the medium 200 and a conveyance path for turning over the medium 200 are not necessary, a time and cost required for printing can be reduced, and a printed product close to double-sided printing can be easily obtained.

### 4. When Functional Liquid is Clear Ink:

As described above, when the functional liquid 26 is a clear ink, the ink 16 may be a pigment ink or a dye ink. A case in which the functional liquid 26 is a clear ink will be described with reference to FIG. 6A. The ejection amounts (IK, FL) of each of the partial regions are set to, for example, IK1 = 85%, FL1 = 5%, IK2 = 65%, FL2 = 10%, IK3 = 99%, FL3 = 10%, IK4 = 85%, and FL4 = 60%. Therefore, the fourth functional liquid ejection amount FL4 in the fourth partial region AD is higher than the first functional liquid ejection amount FL1 in the first partial region AA. In the fourth partial region AD in which the ejection amount of the clear ink is high in the printing region A0, since the ink 16 including the color component is likely to permeate the medium 200 by a large amount of the clear ink, the fourth partial region AD is a relatively light portion in the first image IM1, and the fourth partial region AD is a relatively dark portion in the second image IM2. The ink 16 may be ejected from the first nozzle 14a before the clear ink is ejected from the second nozzle 14b onto the first surface 201 so that the color component is likely to permeate from the first surface 201 to the second surface 202 in the medium 200. In the first partial region AA in which the ejection amount of the clear ink is low in the printing region A0, since the ink 16 including the color component is likely to stay on the first surface 201 of the medium 200, the first partial region AA is a relatively dark portion in the first image IM1, and the first partial region AA is a relatively light portion in the second image IM2.

As described above, it is possible to control the density of each part of the images (IM1 and IM2) on both surfaces of the medium 200 by the level of the ejection amount of the clear ink.

In the patch selection result input screen 500 shown in FIG. 11, the first functional liquid ejection amount FL1 is preferably smaller than the fourth functional liquid ejection amount FL4. Therefore, when the input value of the first functional liquid ejection amount FL1 is equal to or greater than the input value of the fourth functional liquid ejection amount FL4, that is, when the input value of the fourth functional liquid ejection amount FL4 is equal to or smaller than the input value of the first functional liquid ejection amount FL1, the host-side control unit 110 may display an error or control the OK button 509 to be inoperable.

### 5. When Ink is Dye Ink and Functional Liquid is Penetrant Liquid:

A case in which the ink 16 is a dye ink and the functional liquid 26 is a penetrant liquid will be described with reference to FIG. 6A. The ejection amounts (IK, FL) of each of the partial regions are set to, for example, IK1 = 85%, FL1 = 5%, IK2 = 65%, FL2 = 10%, IK3 = 99%, FL3 = 10%, IK4 = 85%, and FL4 = 60%. Therefore, the fourth functional liquid ejection amount FL4 in the fourth partial region AD is higher than the first functional liquid ejection amount FL1 in the first partial region AA. In the fourth partial region AD in which the ejection amount of the penetrant liquid is high in the printing region A0, since the dye ink is likely to permeate the medium 200 by a large amount of the penetrant liquid, the fourth partial region AD is a relatively light portion in the first image IM1, and the fourth partial region AD is a relatively dark portion in the second image IM2. The dye ink may be ejected from the first nozzle 14a before the penetrant liquid is ejected from the second nozzle 14b onto the first surface 201 so that the dye ink is likely to permeate from the first surface 201 to the second surface 202 in the medium 200. In the first partial region AA in which the ejection amount of the penetrant liquid is low in the printing region A0, since the dye ink is likely to stay on the first surface 201 of the medium 200, the first partial region AA is a relatively dark portion in the first image IM1, and the first partial region AA is a relatively light portion in the second image IM2.

As described above, it is possible to control the density of each part of the images (IM1 and IM2) on both surfaces of the medium 200 by the level of the ejection amount of the penetrant liquid.

In the patch selection result input screen 500 shown in FIG. 11, the first functional liquid ejection amount FL1 is preferably smaller than the fourth functional liquid ejection amount FL4. Therefore, when the input value of the first functional liquid ejection amount FL1 is equal to or greater than the input value of the fourth functional liquid ejection amount FL4, that is, when the input value of the fourth functional liquid ejection amount FL4 is equal to or smaller than the input value of the first functional liquid ejection amount FL1, the host-side control unit 110 may display an error or control the OK button 509 to be inoperable.

### 6. When Second Image is Solid Image:

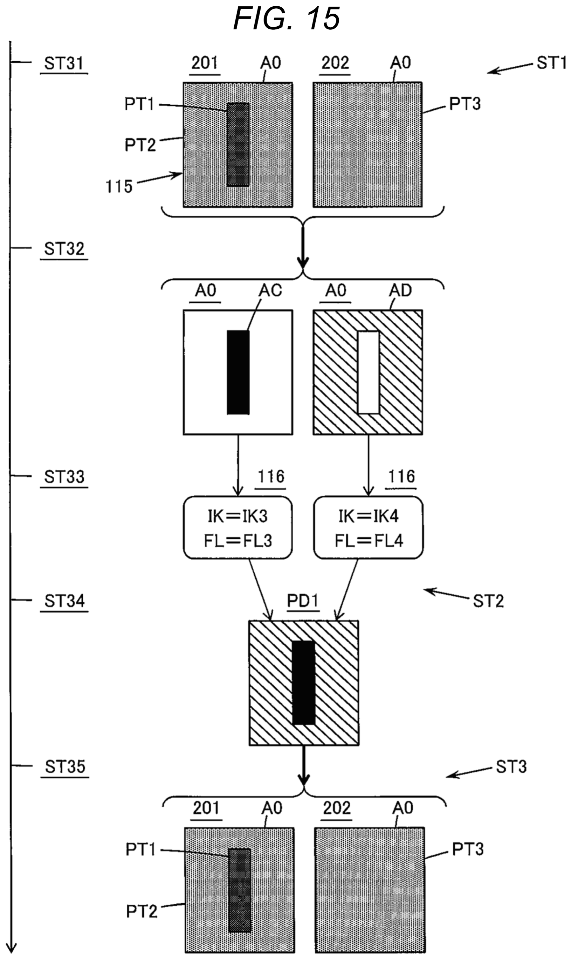

FIG. 15 schematically shows a method of generating the print data PD1 obtained by combining the first image IM1 on the first surface 201 and the solid second image IM2 on the second surface 202 and performing printing. The second image IM2 is a solid image having a predetermined density.

In a first step ST31, the host-side control unit 110 shown in FIG. 2 performs first processing of receiving settings of the first image IM1 to be formed at the first surface 201 of the medium 200 and the solid second image IM2 to be formed at the second surface 202 of the medium 200. The step ST31 is an example of the first step ST1. The first image IM1 includes the first portion PT1 having a predetermined density and the second portion PT2 that is lighter than the first portion PT1. The second image IM2 is an image having a uniform density in which the fourth portion PT4 described above is not present and the third portion PT3 described above spreads throughout. Therefore, the first image IM1 and the second image IM2 have different density patterns.

In a second step ST32, the host-side control unit 110 divides the printing region A0, which is a combination of the first image IM1 and the second image IM2, into the third partial region AC corresponding to the first portion PT1 and the fourth partial region AD corresponding to the second portion PT2. In the third partial region AC, the relatively dark first portion PT1 in the first image IM1 and the second image IM2 overlap each other. In the fourth partial region AD, the relatively light second portion PT2 in the first image IM1 and the second image IM2 overlap each other. The printing region A0 includes these partial regions (AC, AD).

In a third step ST33, the host-side control unit 110 assigns the ink ejection amount IK and the functional liquid ejection amount FL to the two partial regions (AC, AD) with the second image IM2 as the third portion PT3. The host-side control unit 110 assigns the third ink ejection amount IK3 and the third functional liquid ejection amount FL3 to the third partial region AC, and assigns the fourth ink ejection amount IK4 and the fourth functional liquid ejection amount FL4 to the fourth partial region AD. For example, as shown in FIG. 6A, the ejection amounts (IK, FL) are set as IK3 = 99%, FL3 = 10%, IK4 = 85%, and FL4 = 5%. The steps ST32 to ST33 are examples of the second step ST2.

In a fourth step ST34, the host-side control unit 110 generates the print data PD1 by combining the ejection amounts (IK, FL) of the two partial regions (AC, AD) and transmits the print data PD1 to the printing unit 2. In a fifth step ST35, the print control unit 30 controls the print head 11 so that the ink 16 and the functional liquid 26 are ejected onto the first surface 201 according to the ejection amounts (IK, FL) assigned to the partial regions (AC, AD). When the nozzles (14a, 14b) eject the ink 16 and the functional liquid 26 to the first surface 201, the first image IM1 is formed at the first surface 201, and at the same time, the solid second image IM2 is formed at the second surface 202. The steps ST34 to ST35 are examples of the third step ST3.

In the example shown in FIG. 15, a desired print image can be formed on both surfaces of the medium 200 by ejecting the ink 16 only onto one surface of the medium 200.

### 7. When First Image is Solid Image:

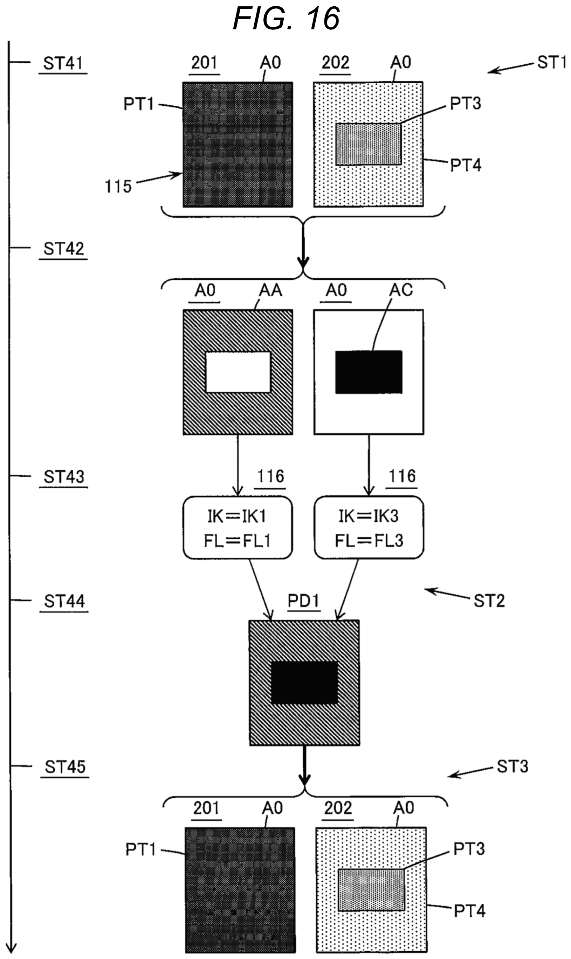

FIG. 16 schematically shows a method of generating the print data PD1 obtained by combining the solid first image IM1 on the first surface 201 and the second image IM2 on the second surface 202 and performing printing. The first image IM1 is a solid image having a predetermined density.

In a first step ST41, the host-side control unit 110 shown in FIG. 2 performs the first processing of receiving settings of a solid first image IM1 to be formed at the first surface 201 of the medium 200 and a second image IM2 to be formed at the second surface 202 of the medium 200. The step ST41 is an example of the first step ST1. The first image IM1 is an image having a uniform density in which the second portion PT2 described above is not present and the first portion PT1 described above spreads throughout. The second image IM2 includes the third portion PT3 having a predetermined density and the fourth portion PT4 that is lighter than the third portion PT3. Therefore, the first image IM1 and the second image IM2 have different density patterns.

In a second step ST42, the host-side control unit 110 divides the printing region A0, which is a combination of the first image IM1 and the second image IM2, into a first partial region AA corresponding to the fourth portion PT4 and the third partial region AC corresponding to the third portion PT3. In the first partial region AA, the relatively light fourth portion PT4 in the second image IM2 and the first image IM1 overlap each other. In the third partial region AC, the relatively dark third portion PT3 in the second image IM2 and the first image IM1 overlap each other. The printing region A0 includes these partial regions (AA, AC).

In a third step ST43, the host-side control unit 110 assigns the ink ejection amount IK and the functional liquid ejection amount FL to the two partial regions (AA, AC) using the first image IM1 as the first portion PT1. The host-side control unit 110 assigns the first ink ejection amount IK1 and the first functional liquid ejection amount FL1 to the first partial region AA, and assigns the third ink ejection amount IK3 and the third functional liquid ejection amount FL3 to the third partial region AC. For example, as shown in FIG. 6A, the ejection amounts (IK, FL) are set as IK1 = 85%, FL1 = 60%, IK3 = 99%, and FL3 = 10%. The steps ST42 to ST43 are examples of the second step ST2.

In a fourth step ST44, the host-side control unit 110 generates the print data PD1 by combining the ejection amounts (IK, FL) of the two partial regions (AA, AC) and transmits the print data PD1 to the printing unit 2. In a fifth step ST45, the print control unit 30 controls the print head 11 so that the ink 16 and the functional liquid 26 are ejected onto the first surface 201 according to the ejection amounts (IK, FL) assigned to the partial regions (AA, AC). When the nozzles (14a, 14b) eject the ink 16 and the functional liquid 26 to the first surface 201, the solid first image IM1 is formed at the first surface 201, and at the same time, the second image IM2 is formed at the second surface 202. The steps ST44 to ST45 are examples of the third step ST3.

In the example shown in FIG. 16, a desired print image can be formed on both surfaces of the medium 200 by ejecting the ink 16 only onto one surface of the medium 200.

### 8. Modifications:

Various modifications of the present disclosure are conceivable.

The medium 200 is not limited to an elongate medium and may be a cut medium.

The color of the ink 16 is not limited to C, M, Y, and K, and may be orange, green, or the like. Of course, the aspect of the present application can also be applied to a case in which some of C, M, Y, and K are not present in the color of the ink 16.

The display unit may be provided in the printing unit 2 instead of the display device 115 of the host device 100 or together with the display device 115.

An entity that performs the above-described processing is not limited to the CPU, and may be an electronic component other than the CPU, such as an application specific integrated circuit (ASIC). Of course, a plurality of CPUs may cooperate with one another to perform the processing described above, or the CPU and another electronic component (for example, ASIC) may cooperate with each other to perform the processing described above.

The processing described above can be changed as appropriate, for example, an order of the processing may be changed. For example, in the ejection amount setting processing of FIG. 12, the processing of S156 and the processing of S158 can be switched.

### 9. Conclusion:

As described above, according to the present disclosure, it is possible to provide a configuration or the like capable of forming desired print images on both surfaces of a medium by ejecting an ink only onto one surface of the medium according to various aspects. Of course, basic functions and effects described above can also be achieved by configurations having only configuration requirements according to the independent claims.

It is possible to implement a configuration in which the elements disclosed in the examples described above are replaced with one another or the combinations thereof are changed, a configuration in which the elements disclosed in known technologies and the examples described above are replaced with one another or the combinations thereof are changed, and the like. The present disclosure also includes these configurations described above and the like.

## Claims

1. A printing system configured to perform printing on a medium having a first surface and a second surface on an opposite side from the first surface, comprising:
a print head including a first nozzle configured to eject an ink containing a color component onto the first surface and a second nozzle configured to eject a functional liquid for changing a color development state of the second surface by the ink onto the first surface; and
a control unit configured to control ejection of the ink and the functional liquid from the print head, wherein
an amount of the ink ejected from the first nozzle per unit area of the first surface is an ink ejection amount, and an amount of the functional liquid ejected from the second nozzle per unit area of the first surface is a functional liquid ejection amount, and
the control unit performs
first processing of receiving settings of a first image to be formed at the first surface and a second image to be formed at the second surface,
second processing of, in order to form the first image on the first surface and the second image on the second surface by ejecting the ink and the functional liquid onto the first surface, assigning the ink ejection amount and the functional liquid ejection amount to each part of a printing region to which the ink and the functional liquid are ejected onto the first surface according to a density of the first image and a density of the second image, and
third processing of controlling the print head so that the ink and the functional liquid are ejected onto the first surface according to the ink ejection amount and the functional liquid ejection amount assigned to each part of the printing region.

2. The printing system according to claim 1, wherein
the first image includes a first portion having a predetermined density and a second portion that is lighter than the first portion,
the second image includes a third portion having a predetermined density and a fourth portion that is lighter than the third portion,
the printing region includes a first partial region in which the first portion and the fourth portion overlap each other, a second partial region in which the second portion and the fourth portion overlap each other, a third partial region in which the first portion and the third portion overlap each other, and a fourth partial region in which the second portion and the third portion overlap each other, and
in the second processing, the control unit
assigns, to the first partial region, a first ink ejection amount as the ink ejection amount and a first functional liquid ejection amount as the functional liquid ejection amount,
assigns, to the second partial region, a second ink ejection amount as the ink ejection amount and a second functional liquid ejection amount as the functional liquid ejection amount,
assigns, to the third partial region, a third ink ejection amount as the ink ejection amount and a third functional liquid ejection amount as the functional liquid ejection amount, and
assigns, to the fourth partial region, a fourth ink ejection amount as the ink ejection amount and a fourth functional liquid ejection amount as the functional liquid ejection amount.

3. The printing system according to claim 2, wherein
the control unit further performs
fourth processing of controlling the print head so that a test pattern including a plurality of patches having different combinations of the ink ejection amount and the functional liquid ejection amount is formed on the medium, and
fifth processing of receiving an input of a selection result of a patch corresponding to a partial region selected from the first partial region, the second partial region, the third partial region, and the fourth partial region among the plurality of patches and assigning, to the partial region, the ink ejection amount and the functional liquid ejection amount corresponding to the selection result.

4. The printing system according to claim 2, wherein
the control unit further performs
fourth processing of controlling the print head so that a test pattern including a plurality of patches having different combinations of the ink ejection amount and the functional liquid ejection amount is formed on the medium, and
sixth processing of determining, based on a first reading result obtained by reading a density of each of the patches formed at the first surface by a reading unit and a second reading result obtained by reading a density of each of the patches formed at the second surface by the reading unit, at least a part of the first ink ejection amount, the first functional liquid ejection amount, the second ink ejection amount, the second functional liquid ejection amount, the third ink ejection amount, the third functional liquid ejection amount, the fourth ink ejection amount, and the fourth functional liquid ejection amount.

5. The printing system according to claim 2, wherein
the ink is a pigment ink containing a dispersed pigment as the color component,
the functional liquid is a treatment liquid containing an aggregating agent that aggregates the pigment, and
the fourth functional liquid ejection amount in the fourth partial region is lower than the first functional liquid ejection amount in the first partial region.

6. The printing system according to claim 2, wherein
the functional liquid is a clear ink not having the color component, and
the fourth functional liquid ejection amount in the fourth partial region is greater than the first functional liquid ejection amount in the first partial region.

7. The printing system according to claim 2, wherein
the ink is a dye ink containing a dye as the color component,
the functional liquid is a penetrant liquid that assists the dye ink to permeate the medium, and
the fourth functional liquid ejection amount in the fourth partial region is greater than the first functional liquid ejection amount in the first partial region.

8. The printing system according to claim 1, wherein
in the first processing, the control unit is configured to cause a display unit to display the first image and the second image, and to receive settings of the first image and the second image to be displayable on the display unit,
in the second processing, the control unit is configured to invert the second image, and to assign the ink ejection amount and the functional liquid ejection amount to each part of the printing region based on the first image and the inverted second image.

9. The printing system according to claim 1, wherein
the printing region includes a first functional liquid amount region in which the functional liquid ejection amount is a first ejection amount and a second functional liquid amount region in which the functional liquid ejection amount is a second ejection amount lower than the first ejection amount, and
in the second processing, the control unit assigns the first ejection amount to the first functional liquid amount region and assigns the second ejection amount to the second functional liquid amount region.

10. The printing system according to claim 9, wherein
the first functional liquid amount region includes a first ink amount region in which the ink ejection amount is a third ejection amount and a second ink amount region in which the ink ejection amount is a fourth ejection amount lower than the third ejection amount, and
in the second processing, the control unit assigns the third ejection amount to the first ink amount region and assigns the fourth ejection amount to the second ink amount region.

11. The printing system according to claim 9, wherein
the second functional liquid amount region includes a third ink amount region in which the ink ejection amount is a fifth ejection amount and a fourth ink amount region in which the ink ejection amount is a sixth ejection amount lower than the fifth ejection amount, and
in the second processing, the control unit assigns the fifth ejection amount to the third ink amount region and assigns the sixth ejection amount to the fourth ink amount region.

12. A printing method of ejecting an ink containing a color component from a first nozzle of a print head onto a first surface of a medium and ejecting a functional liquid from a second nozzle of the print head onto the first surface,
the medium having a second surface on an opposite side from the first surface,
the functional liquid changing a color development state of the second surface by the ink, and
an amount of the ink ejected from the first nozzle per unit area of the first surface being an ink ejection amount, and an amount of the functional liquid ejected from the second nozzle per unit area of the first surface being a functional liquid ejection amount,
the printing method comprising:
a first step of receiving settings of a first image to be formed at the first surface and a second image to be formed at the second surface;
a second step of, in order to form the first image on the first surface and the second image on the second surface by ejecting the ink and the functional liquid onto the first surface, assigning the ink ejection amount and the functional liquid ejection amount to each part of a printing region to which the ink and the functional liquid are ejected onto the first surface according to a density of the first image and a density of the second image; and
a third step of ejecting the ink and the functional liquid from the print head onto the first surface according to the ink ejection amount and the functional liquid ejection amount assigned to each part of the printing region.
